# EUROPEAN PATENT APPLICATION

(11) **EP 4 525 084 A1**
(43) Date of publication of application: **19.03.2025**
(21) Application number: 24179999.8
(22) Date of filing: 04.06.2024
(51) Int. Cl.: H01M 4/36, H01M 4/58, H01M 4/62, H01M 4/66, H01M 6/18, H01M 10/0562, H01M 4/02

(54) **CATHODE FOR ALL SOLID SECONDARY BATTERY, AND SOLID SECONDARY BATTERY INCLUDING THE SAME**

(30) Priority: 12.09.2023 KR 20230121173
(71) Applicant: Samsung SDI Co., Ltd., Yongin-si, Gyeonggi-do 17084 (KR)
(72) Inventor: Jo, Sungnim, Yongin-si, Gyeonggi-do 17084 (KR); Son, Inhyuk, Yongin-si, Gyeonggi-do 17084 (KR); Park, Taehyun, Yongin-si, Gyeonggi-do 17084 (KR); Lim, Hyungsub, Yongin-si, Gyeonggi-do 17084 (KR); Shim, Kyueun, Yongin-si, Gyeonggi-do 17084 (KR); Lee, Jieun, Yongin-si, Gyeonggi-do 17084 (KR); Kim, Jinwoo, Yongin-si, Gyeonggi-do 17084 (KR)
(74) Representative: Michalski Hüttermann & Partner Patentanwälte mbB

(57) **Abstract**

An all solid secondary battery including a cathode, an anode, and a solid electrolyte layer between the cathode and the anode, wherein the cathode includes a cathode current collector, a carbon coating layer on the cathode current collector, and a cathode active material layer on the carbon coating layer and containing a composite cathode active material and a solid electrolyte, wherein the composite cathode active material includes a Li₂S-containing composite.

## Description

### CROSS-REFERENCES TO RELATED APPLICATION

The present application claims priority to and the benefit of Korean Patent Application No. 10-2023-0121173, filed on September 12, 2023, in the Korean Intellectual Property Office, the entire content of which is incorporated herein by reference.

### BACKGROUND

### 1. Field

Embodiments of the present disclosure described herein are related to a cathode for an all solid secondary battery and an all solid secondary battery including the cathode.

### 2. Description of the Related Art

In line with recent requirements in industry, batteries with high energy density and stability are actively being developed. For example, lithium batteries are utilized for one or more suitable purposes in information devices, communication devices, vehicles (e.g., electric vehicles, automobiles, and/or cars), and/or the like. In automobiles, safety may be emphasized as they may impact human wellbeing.

Lithium batteries employing liquid electrolytes may be relatively more susceptible to fires and/or explosions due to a short circuit. Solid secondary batteries employing solid electrolytes in place of liquid electrolytes have been proposed. Compared with liquid electrolytes, solid electrolytes may be less likely to cause a fire.

Therefore, by employing solid electrolytes instead of liquid electrolytes, an all solid secondary battery may have a reduced risk of fire or explosion. That is, a solid battery may provide improved safety.

### SUMMARY

Aspects according to one or more embodiments are directed toward a cathode for an all solid secondary battery which includes a Li₂S-containing composite and contains a carbon coating layer between a cathode current collector and a cathode active material layer, and thus reduces volume changes during charging and discharging.

Aspects according to one or more embodiments are directed toward an all solid secondary battery which has improved performance by including the cathode.

Additional aspects will be set forth in part in the description which follows and, in part, will be apparent from the description, or may be learned by practice of the presented embodiments of the present disclosure.

According to one or more embodiments, a cathode for an all solid secondary battery includes:
a cathode current collector,
a carbon coating layer on the cathode current collector, and
a cathode active material layer on the carbon coating layer and containing a composite cathode active material and a solid electrolyte wherein the composite cathode active material includes a Li₂S-containing composite.

According to one or more embodiments, the cathode may further include an interlayer containing an adhesive polymer, the interlayer being between the carbon coating layer and the cathode active material layer.

According to one or more embodiments, the cathode active material layer may further include one or more of (e.g., selected from among) a binder and a conductive material.

According to one or more embodiments, an all solid secondary battery including the cathode, an anode, and a solid electrolyte layer arranged between the cathode and the anode.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a cross-sectional view of an all solid secondary battery according to embodiments;
FIG. 2 is a cross-sectional view of an all solid secondary battery according to embodiments;
FIG. 3 is a cross-sectional view of an all solid secondary battery according to embodiments;
FIG. 4 is a cross-sectional view of an all solid secondary battery according to embodiments; and
FIG. 5 is a cross-sectional view of an all solid secondary battery according to embodiments.

### DETAILED DESCRIPTION

Reference will now be made in more detail to embodiments, examples of which are illustrated in the accompanying drawings, wherein like reference numerals refer to like elements throughout, and duplicative descriptions thereof may not be provided, and duplicative descriptions thereof may not be provided. In this regard, the present embodiments may have different forms and should not be construed as being limited to the descriptions set forth herein. Accordingly, the embodiments are merely described herein, by referring to the drawings, to explain aspects of the present description. As utilized herein, the term "and/or" includes any and all combinations of one or more of the associated listed items. Expressions such as "at least one of," when preceding a list of elements, modify the entire list of elements and do not modify the individual elements of the list.

Unless otherwise defined, all terms (including technical and scientific terms) utilized herein have the same meaning as commonly understood by one of ordinary skill in the art to which the present disclosure belongs. It will be further understood that terms, such as those defined in commonly utilized dictionaries, should be interpreted as having a meaning that is consistent with their meaning in the context of the specification and the relevant art and should not be interpreted in an idealized sense or an overly formal sense unless expressly so defined herein.

Embodiments are described herein with reference to cross section illustrations that are schematic illustrations of idealized embodiments. As such, variations from the illustrated shapes as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, angles that are illustrated as being sharp may be rounded. Thus, the regions illustrated in the drawings are schematic in nature and their shapes are not intended to illustrate the precise shape of a region and are not intended to limit the scope of the present claims.

The present disclosure may, however, be embodied in many different forms and should not be construed as limited to the example embodiments set forth herein. Rather, these example embodiments are provided so that this disclosure will be thorough and complete, and will fully convey the scope of the present disclosure to those skilled in the art. In the drawings, like numbers refer to like elements throughout, and duplicative descriptions thereof may not be provided.

It will also be understood that when an element is referred to as being "on" or "over" another element, it can be directly on the other element or intervening elements may also be present. In contrast, when an element is referred to as being "directly on" or "directly over" another element, there are no intervening elements present.

It will be understood that, although the terms first, second, third, and/or the like may be utilized herein to describe one or more suitable elements, components, regions, layers, and/or sections, these elements, components, regions, layers, and/or sections should not be limited by these terms. These terms are only utilized to distinguish one element, component, region, layer, or section, from another element, component, region, layer, or section. For example, a first element, component, region, layer, or section could be termed a second element, component, region, layer, or section, without departing from the teachings of the present disclosure.

The terminology utilized herein is for the purpose of describing particular embodiments only and is not intended to be limiting of the present disclosure. As utilized herein, the singular forms "a", "an" and "the" are intended to include the plural forms as well including "at least one", unless the context clearly indicates otherwise. The term "at least one" should not be interpreted as being limited to a singular form. As utilized herein, the term "and/or" includes any and all combinations of one or more of the associated listed items. It will be further understood that the terms "comprises" and/or "comprising," or "includes" and/or "including" when utilized in this specification, specify the presence of stated features, regions, integers, steps, operations, elements, and/or components, but do not preclude the presence or addition of one or more other features, regions, integers, steps, operations, elements, components, and/or groups thereof.

As utilized herein, expressions such as "at least one of", "one of", and "of (e.g., selected from among)", when preceding a list of elements, modify the entire list of elements and do not modify the individual elements of the list. For example, "at least one of a, b or c", "at least one selected from among a, b and c", and/or the like, may indicate only a, only b, only c, both (e.g., simultaneously)a and b, both (e.g., simultaneously) a and c, both (e.g., simultaneously) b and c, all of a, b, and c, or variations thereof.

Furthermore, spatially relative terms, such as "lower", "bottom", or "" and "upper", "top", or "above" may be utilized herein to conveniently describe one element or aspect's relationship to another element or aspect. It will be understood that spatially relative terms are intended to encompass different orientations of the device while the device is in utilize or operated, in addition to the orientation depicted in the drawings. For example, if (e.g., when) the device in one of the drawings is turned over, elements described as being on the "lower" or "bottom" side of other elements would then be oriented on "upper" or "top" sides of the other elements. Therefore, example term "lower" can therefore, encompasses both (e.g., simultaneously) an orientation of "lower" and "upper". The device may be placed in other orientations (may be rotated by 90 degrees or in a different direction), and spatially relative terms utilized herein may be interpreted accordingly.

"Group" refers to a group in the Periodic Table of Elements of the Elements according to the 1-18 Group numbering system by the International Union of Pure and Applied Chemistry ("IUPAC").

The term "particle size" or "particle diameter" as utilized herein refers to an average particle diameter if (e.g., when) the particle is spherical, and refers to an average major axis length if (e.g., when) the particle is non-spherical. The particle diameter may be measured utilizing a particle size analyzer (PSA). The term "particle size" or "particle diameter" refers to an average particle diameter, for example. The term "average particle diameter" as utilized herein refers to, for example, a median particle diameter (D50).

D50 may refer to a particle size corresponding to a cumulative 50 vol% as calculated from the side of particles with the smallest particle size in a particle size distribution as measured by a laser diffraction method.

D90 may refer to a particle size corresponding to a cumulative 90 vol% as calculated from the side of particles with the smallest particle size in a particle size distribution as measured by a laser diffraction method.

D10 may refer to a particle size corresponding to a cumulative 10 vol% as calculated from the side of particles with the smallest particle size in a particle size distribution as measured by a laser diffraction method.

As utilized herein, the term "metal" refers to both (e.g., simultaneously) metals and metalloids such as silicon and germanium, in an elemental or ionic state.

As utilized herein, the term "alloy" refers to a mixture of two or more metals.

As utilized herein, the term "electrode active material" refers to an electrode material capable of undergoing lithiation and delithiation.

As utilized herein, the term "cathode active material" refers to a cathode material capable of undergoing lithiation and delithiation.

As utilized herein, the term "anode active material" refers to an anode material capable of undergoing lithiation and delithiation.

As utilized herein, the terms "lithiation" and "to lithiate" refer to a process of adding lithium to an electrode active material.

As utilized herein, the terms "delithiation" and "to delithiate" refer to a process of removing lithium from an electrode active material.

As utilized herein, the terms "charging" and "to charge" refer to a process of providing electrochemical energy to a battery.

As utilized herein, the terms "discharging" and "to discharge" refer to a process of removing electrochemical energy from a battery.

As utilized herein, the terms "positive electrode" and "cathode" refer to an electrode at which electrochemical reduction and lithiation take place during a discharging process.

As utilized herein, the terms "negative electrode" and "anode" refer to an electrode at which electrochemical oxidation and delithiation take place during a discharging process.

As utilized herein, the term "substantially" and similar terms are utilized as terms of approximation and not as terms of degree, and are intended to account for the inherent deviations in measured or calculated values that would be recognized by those of ordinary skill in the art. Also, the term "about" and similar terms, when utilized herein in connection with a numerical value or a numerical range, are inclusive of the stated value and a value within an acceptable range of deviation for the particular value as determined by one of ordinary skill in the art, considering the measurement in question and the error associated with measurement of the particular quantity (e.g., the limitations of the measurement system). For example, "about" may refer to within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

While specific examples and are described herein, there may be alternatives, modifications, variations, improvements, and substantial equivalents of the examples disclosed herein, including those that are not presently unforeseen or unappreciated, may arise from applicants or those skilled in the art. Accordingly, the appended claims as filed and as they can be amended are intended to embrace all such alternatives, modifications, variations, improvements and substantial equivalents.

"In present disclosure, the term "A is on surface of B" does not exclude embodiments where there are further layers between A and B".

Here, the term "thickness" means an average thickness.

In the present disclosure, the aspect ratio represents the ratio (L1/L2) of the major axis length L1 (eg, length) and the minor axis length L2 (eg, diameter). Here, the aspect ratio, major axis length, minor axis length, length, and diameter represent the average aspect ratio, average major axis length, average minor axis length, average length, and average diameter. The aspect ratio can be evaluated using a scanning electron microscope (SEM).

Hereinbelow, a cathode according to embodiments, an all solid secondary battery including the same, and a method of preparing an all solid secondary battery will be described in greater detail.

### Cathode

A cathode according to embodiments may include a cathode current collector; a carbon coating layer located on the cathode current collector; and a cathode active material layer located on the carbon coating layer and containing a composite cathode active material and a solid electrolyte, wherein the composite cathode active material may include a Li₂S composite,
the composite of Li₂S and lithium salt may be expressed as Li₂S-LiₐX_{b} (1≤a≤5, 1≤b≤5), and
X may be I, Br, Cl, F, H, O, Se, Te, N, P, As, Sb, Al, B, OCI, PF₆, BF₄, SbF₆, AsF₆, ClO₄, AlO₂, AlCl₄, NOs, COs, BH₄, SO₄, BOs, PO₄, NCl, NCl₂, BN₂, or a combination thereof.

In an all solid secondary battery utilizing lithium sulfide as a cathode active material, the lithium sulfide, due to being an insulator with little electrical and ionic conductivity, may be required to form (or provide) a complex with a material with high electrical and ionic conductivity. Further, cathode active materials may be separated from a cathode current collector due to contractions and expansions during charging and discharging of an all solid secondary battery employing a cathode containing lithium sulfide, and cause a decrease in electronic conductivity. In this regard, an improvement may be desired or suitable.

In this context, the cathode disclosed herein forms a carbon coating layer between a cathode current collector and a cathode active material layer containing a Li₂S composite. Forming the carbon coating layer as such may enlarge interfacial areas between the current collector and the cathode active material layer, and thus improve adhesion and reduce electric resistance at interfaces.

Between the carbon coating layer and the cathode active material layer, an interlayer containing an adhesive polymer may be further included. The carbon coating layer, which is a conductive particle layer, may cause a side reaction at the interface with the sulfide-based solid electrolyte particles present in the cathode active material layer when the battery is operated. However, as described above, if (e.g., when) the interlayer is formed between the carbon coating layer and the cathode active material layer, the problem of deterioration of the sulfide-based solid electrolyte can be prevented or reduced.

Further, including the interlayer may prevent or reduce deterioration of the sulfide-based solid electrolyte by suppressing side reactions between conductive particles of the carbon coating layer, and the sulfide-based solid electrolyte of the cathode active material layer, and moreover, may further decrease interfacial electronic resistance by maximizing or increasing a contact area and increasing adhesion between the cathode active material layer and the interlayer. The current collector, the carbon coating layer, and the interlayer may each be regarded as a substrate for a cathode plate and may be considered to be a cathode substrate capable of preventing or reducing deterioration of a sulfide-based solid electrolyte. These cathode substrates, due to high adhesion with cathode active material layers, have relatively low interfacial resistance, and may effectively suppress or reduce the deterioration of a sulfide-based solid electrolyte that occurs during battery operation.

The cathode may prevent or reduce deterioration of a sulfide-based solid electrolyte by suppressing side reactions at an interface between conductive materials and the sulfide-based solid electrolyte, and may lower interfacial electronic resistance by increasing adhesion and maximizing or increasing a contact area between a cathode active material layer and a current collector substrate.

The thickness of the carbon coating layer may be about 1 µm or less, about 1 nanometer (nm) to about 1 micrometer (µm), about 5 nm to about 1 µm, about 5 nm to about 800 nm, about 5 nm to about 600 nm, about 10 nm to about 500 nm, about 10 nm to about 400 nm, about 10 nm to about 300 nm, about 10 nm to about 200 nm, about 10 nm to about 100 nm, about 20 nm to about 100 nm, or about 20 nm to about 50 nm. If (e.g., when) the thickness of the carbon coating layer is in the above ranges, the adhesion between the cathode substrate and the cathode active material layer may increase, and the electrochemical properties of the cathode may improve.

The carbon coating layer may include a carbon material, and may include, for example, natural graphite, artificial graphite, carbon black, acetylene black, Ketjen black, carbon fibers, carbon nanotubes, graphene, porous carbon, or a combination thereof.

The interlayer may be a film continuously covering the carbon coating layer. The interlayer may be formed to a thickness of several to tens of nanometers, and without adversely affecting the battery, may effectively deterioration of a sulfide-based solid electrolyte, improve adhesive strength of the cathode, and reduce interfacial resistance. The thickness of the interlayer may be about 1 nm to about 1 µm, about 1 nm to about 800 nm, about 1 nm to about 500 nm, about 1 nm to about 400 nm, about 5 nm to about 300 nm, about 10 nm to about 300 nm, about 10 nm to about 100 nm, or about 10 nm to about 50 nm. The interlayer may be formed in the above thickness ranges to reduce interfacial resistances while effectively protecting a solid electrolyte. The interlayer may not only prevent or reduce side reactions between a sulfide-based solid electrolyte and a conductive material, but also, due to high adhesive strength, improve adhesion between a substrate and a cathode active material layer and reduce an interfacial electric resistance.

According to other embodiments, the thickness of the interlayer may be about 20 nm to about 1 µm, about 20 nm to about 800 nm, about 20 nm to about 500 nm, about 20 nm to about 300 nm, or about 20 nm to about 100 nm. If (e.g., when) the interlayer is formed to a thickness in the above ranges, it may be possible to effectively protect the solid electrolyte while reducing interfacial resistances.

Examples of the adhesive polymer constituting the interlayer may include one or more of (e.g., selected from among) polydopamine, a cation substituted polycarboxylic acid, a cation substituted polycarboxylic acid copolymer, poly(norepinephrin), poly(meth)acrylamide, polyvinyl alcohol, poly(2-hydroxymethyl(meth)acrylate), poly(methyl(meth)acrylate-co-(meth)acrylic acid), polymethyl (meth)acrylate, poly((meth)acrylic acid), and a poly(styrene-co-(meth)acrylic acid) copolymer.

The cation substituted polycarboxylic acid and a copolymer thereof may include at least one cation of (e.g., selected from among) lithium ion (Li⁺), sodium ion (Na⁺), potassium ion (K⁺) and ammonium ion (NH₄⁺). Polycarboxylic acid refers to a polymer obtained through polymerization of a monomer having one or more carboxyl groups (-COOH) and one or more different types (kinds) (kinds) of monomers, and has a weight average molecular weight of 1,000 to 1,000,000. Here, a weight average molecular weight is measured by a gel permeation chromatography (GPC). Examples of the polycarboxylic acids may include polyacrylic acid, polymethacrylic acid, polymaleic acid, and/or the like. The cationically substituted polycarboxylic acid may be a material in which a hydrogen of the polycarboxylic acid is substituted with a cation, and for example, may be one or more of (e.g., selected from among) lithium polyacrylate (LiPAA) and lithium polymethacrylate.

The cation substituted polycarboxylic acid copolymer may be a copolymer containing a monomeric repeat unit corresponding to a cation substituted polycarboxylic acid, and examples of such a copolymer may include a poly(acrylic acid-co-maleic acid) lithium salt, or a poly(methylvinyl ether-alt-maleic acid) lithium salt, or a poly(butadiene-co-maleic acid) lithium salt.

One or more of (e.g., selected from among) the cation substituted polycarboxylic acid and a copolymer thereof may have a glass transition temperature of about 50 °C or more, for example, about 50 °C to about 200 °C, and for example, about 50 °C to about 150 °C. Further, the one or more of (e.g., selected from among) the cation substituted polycarboxylic acid and a copolymer thereof may have a melting point of about 100 °C or more, for example, about 100 °C to about 300 °C, for example, about 100 °C to about 200 °C. If (e.g., when) the interlayer is formed utilizing a cation substituted polycarboxylic acid and a copolymer having the glass transition temperature and melting point in the above ranges, the interlayer may retain its shape at a battery operating temperature (e.g., about 0 °C to about 90 °C). The one or more of (e.g., selected from among) the cation substituted polycarboxylic acid and a copolymer thereof may have a weight average molecular weight of about 1,000 to about 1,000,000, and have a degree of polymerization of about 10 to about 1,500, for example, about 14 to about 1,400.

Examples of the cation substituted polycarboxylic acid may include lithium polyacrylate (Li-PAA).

By including the interlayer, the cathode may not only improve adhesion between the current collectors and the cathode active material layers, but also improve stability and reliability with respect to mechanical deformations such as bending, thus improving the all solid secondary battery performance. For example, in an all solid secondary battery utilizing a cathode containing lithium sulfide as cathode active material, it may be possible to prevent or reduce a phenomenon in which active materials are separated from the surface of a current collector due to volume changes of a cathode active material, and by forming (or providing) an adhesive binder layer, it may be possible to realize a high-capacity solid secondary battery due to a decrease of interfacial resistances between a current collector and a cathode active material layer.

The Li₂S composite may include, for example, a composite of Li₂S and lithium salt.

The composite of Li₂S and lithium salt has ductility and is thus distinguished from oxide-based solid electrolytes that have brittleness, for example, oxide-based solid electrolytes with a garnet structure. The composite of Li₂S and lithium salt, due to having lithium ion conductivity, may be thus distinguished from comparable lithium-free metal oxides, which do not have lithium ion conductivity, e.g., alumina. The composite of Li₂S and lithium salt may be, for example, a product of mechanical milling of Li₂S and the lithium salt. The composite of Li₂S and a lithium salt may be, for example, a product of a mecahnochemical reaction between Li₂S and the lithium salt, and may be thus distinguished from a simple mixture of Li₂S and the lithium salt. The simple mixture of Li₂S and a lithium salt, by failing to maintain dense interfaces between Li₂S and the lithium salt, may provide high interfacial resistance and cause an increase of the internal resistance of the cathode.

The composite of Li₂S and lithium salt may be expressed as Li₂S-LiₐX_{b} (1≤a≤5, 1≤b≤5). X may be I, Br, Cl, F, H, O, Se, Te, N, P, As, Sb, Al, B, OCI, PF₆, BF₄, SbF₆, AsF₆, ClO₄, AlO₂, AlCl₄, NOs, COs, BH₄, SO₄, BOs, PO₄, NCl, NCl₂, BN₂, or a combination thereof. a may be, for example, 1, 2, 3, 4 or 5. b may be, for example, 1, 2, 3, 4 or 5. The lithium salt may be, for example, a compound that does not contain sulfur (S). The lithium salt may be, for example, a binary compound or a ternary compound. For example, the lithium salt may be a binary compound composed of lithium and one element of (e.g., selected from among) Groups 13 to 17 of the Periodic Table of the Elements. For example, the lithium salt may be a ternary compound composed of lithium and two elements of (e.g., selected from among) Groups 13 to 17 of the Periodic Table of the Elements. Examples of the binary compound may include Lil, LiBr, LiCl, LiF, LiH, Li₂O, Li₂Se, Li₂Te, Li₃N, LisP, Li₃As, Li₃Sb, Li₃Al₂, LiBs, or a combination thereof. With the composite including the binary compound, the composite may have further improved ionic conductivity. Because the cathode includes the composite, the internal resistance of the cathode may further decrease. Consequently, an all solid secondary battery including the cathode may have improved cycling performance. Examples of the ternary compounds may include Li₃OCl, LiPF₆, LiBF₄, LiSbF₆, LiAsF₆, LiClO₄, LiAlO₂, LiAlCl₄, LiNOs, Li₂CO₃, LiBH₄, Li₂SO₄, LisBOs, Li₃PO₄, Li₄NCl, Li₅NCl₂, Li₃BN₂, or a combination thereof. With the composite including the ternary compound, the composite may have further improved ionic conductivity. Because the cathode includes the composite, the internal resistance of the cathode may further decrease. Consequently, an all solid secondary battery including the cathode may have further improved cycling performance.

The composite may further include a carbonaceous material. The composite may be a composite of Li₂S, a lithium salt and carbonaceous material.

The carbonaceous material may be, for example, any material containing carbon atoms, available as a conductive material in the art. The carbonaceous material may be, for example, a crystalline carbon, an amorphous carbon, or a combination thereof. The carbonaceous material may be, for example, a fired product of a carbon precursor. The carbonaceous material may be, for example, a carbon nanostructure. Examples of the carbon nanostructure may include a one-dimensional carbon nanostructure, a two-dimensional carbon nanostructure, a three-dimensional carbon nanostructure, or a combination thereof. Examples of the carbon nanostructure may include carbon nanotubes, carbon nanofibers, carbon nanotubes, carbon nanorods, graphene, or a combination thereof. The carbonaceous material may be, for example, a porous carbonaceous material or a non-porous carbonaceous material. The porous carbonaceous material may contain, for example, periodic and regular two-dimensional or three-dimensional pores. Examples of the porous carbonaceous material may include carbon black such as Ketjen black, acetylene black, Denka black, thermal black, and channel black; and graphite, activated carbon, or a combination thereof. The form of the carbonaceous material may be a particulate form (e.g., in a form of particles), a sheet form, a flake shape, and/or the like, but without being limited thereto, may utilize any material available as carbonaceous material in the art. The content (e.g., amount) of the carbonaceous material included in the composite of Li₂S, a lithium salt, and a carbonaceous material may be, for example, about 1 wt% to about 20 wt%, about 5 wt% to about 20 wt%, or about 10 wt% to about 20 wt% with respect to the total weight of the composite. If (e.g., when) the amount of the carbonaceous material excessively increases, the energy density of a cathode and an all-solid secondary battery may deteriorate. If (e.g., when) the content (e.g., amount) of the carbonaceous material is excessively decreased, the electronic conductivity of the composite of Li₂S, lithium salt and carbonaceous material may decrease, thus increasing the internal resistance of a cathode. As a result, the cycling performance of the all-solid secondary battery may deteriorate.

The Mohs hardness of the lithium salt and the carbonaceous material may each be greater than that of Li₂S. The Mohs hardness of Li₂S may be, for example, about 0.6 or less. The Mohs hardness of the lithium salt may be about 0.7 or more, about 0.8 or more, about 0.9 or more, about 1.0 or more, about 1.5 or more, or about 2.0 or more. Because the lithium salt has a Mohs hardness in the above ranges, Li₂S may be more easily pulverized during the milling process, and a solid solution of Li₂S and the lithium salt may more easily form. The Mohs hardness of LiI may be, for example, about 2.0. The Mohs hardness of the carbonaceous material may be about 0.7 or more, about 0.8 or more, about 0.9 or more, about 1.0 or more, about 1.2 or more, or about 1.5 or more. Because the carbonaceous material has a Mohs hardness in the above ranges, Li₂S may be more easily pulverized during the milling process, and a solid solution of Li₂S, lithium salt, and carbonaceous material may be more easily formed. The Mohs hardness of carbon nanofibers (CNF) may be, for example, about 1.5.

The carbonaceous material may include, for example, a fibrous carbonaceous material. Because the composite of Li₂S, lithium salt, and carbonaceous material includes a fibrous carbonaceous material, the electronic conductivity of the composite of Li₂S, lithium salt, and carbonaceous material may further improve. Because the composite of Li₂S, lithium salt, and carbonaceous material includes a fibrous carbonaceous material, electron conduction from the surface of the composite of Li₂S, lithium salt, and carbonaceous material to the inside of the composite of Li₂S, lithium salt, and carbonaceous material may be more easily carried out. The internal resistance of a cathode including the composite of Li₂S, lithium salt, and carbonaceous material may decrease, and the cycling performance of an all solid secondary battery including the dry cathode film may further improve.

For example, the fibrous carbonaceous material may have an aspect ratio of about 2 or more, about 3 or more, about 4 or more, about 5 or more, about 10 or more, or about 20 or more. For example, the fibrous carbonaceous material may have an aspect ratio of about 2 to about 30, about 3 to about 30, about 4 to about 30, about 5 to about 30, about 10 to about 30, or about 20 to about 30. For example, the fibrous carbonaceous material may have an aspect ratio of about 2 to about 30, about 2 to about 20, about 2 to about 10, about 2 to about 8, about 2 to about 5, or about 2 to about 4. Because the fibrous carbonaceous material has an aspect ratio in the above ranges, the overall electron conductivity of the composite of Li₂S, lithium salt, and carbonaceous material may improve, and local irregularities of electronic conductivity within the composite of Li₂S, lithium salt, and carbonaceous material may be further mitigated.

The fibrous carbonaceous material may include, for example, carbon nanostructures. The carbon nanostructures may include, for example, carbon nanofibers (CNF), carbon nanotubes (CNT), carbon nanobelts, carbon nanorods, or a combination thereof.

The carbon nanostructures may form (or provide) a primary carbon nanostructure consisting of one carbon nanostructure, and a secondary carbon nanostructure in which a plurality of carbon nanostructures are aggregated.

The diameter of the primary carbon nanostructure may be, for example, about 1 nm to about 200 nm, about 1 nm to about 150 nm, about 1 nm to about 100 nm, about 1 nm to about 50 nm, about 1 nm to about 30 nm, or about 1 nm to about 20 nm. The length of the primary carbon nanostructure may be, for example, about 10 nm to about 2 µm, about 10 nm to about 1.5 µm, about 10 nm to about 1 µm, about 10 nm to about 500 nm, about 10 nm to about 400 nm, about 10 nm to about 300 nm, about 10 nm to about 200 nm, or about 10 nm to about 100 nm. The diameter and length of the primary carbon nanostructure may be measured from a scanning electron microscope (SEM) image or a transmission electron microscope (TEM) image. Here, the diameter and length represent the average diameter and average length, respectively. In other embodiments, the diameter and/or length of the primary carbon nanostructure may be measured by a laser diffraction method.

The secondary carbon nanostructure may be a structure formed by assembling the primary carbon nanostructure to form (or provide) a bundle type or kind or a rope type or kind, in whole or in part. The secondary carbon nanostructure may be, for example, a bundle-type or kind carbon nanostructure, a rope-type or kind carbon nanostructure, or a combination thereof. The diameter of the secondary carbon nanostructure may be, for example, about 2 nm to about 200 nm, about 3 nm to about 150 nm, about 5 nm to about 100 nm, about 5 nm to about 50 nm, about 5 nm to about 30 nm, or about 5 nm to about 20 nm. The length of the secondary carbon nanostructure may be, for example, about 20 nm to about 2 µm, about 30 nm to about 1.5 µm, about 50 nm to about 1 µm, about 50 nm to about 500 nm, about 50 nm to about 400 nm, about 50 nm to about 300 nm, about 50 nm to about 200 nm, or about 50 nm to about 100 nm. Here, the diameter and length represent the average diameter and average length, respectively. The diameter and length of the secondary carbon nanostructure may be measured from an SEM image or an optical microscope image. In other embodiments, the diameter and/or length of the secondary carbon nanostructure may be measured by a laser diffraction method. The secondary carbon nanostructure may be converted into a primary carbon nanostructure by being dispersed in a solvent, for example, and then utilized to prepare a composite of Li₂S, a lithium salt, and a carbonaceous material.

The composite of Li₂S and lithium salt, or the composite of Li₂S, lithium salt, and carbonaceous material may include, for example, a solid solution of Li₂S and a lithium salt. Because the composite includes a solid solution of Li₂S and a lithium salt, the ionic conductivity of the composite may increase. For example, because the solid solution of Li₂S and a lithium salt includes lithium ions arranged in Li₂S crystallites, the ionic conductivity of the solid solution of Li₂S and a lithium salt may be improved over the ionic conductivity of Li₂S. As a result, the ionic conductivity of the composite may improve, and the internal resistance of the composite may be reduced. Because the cathode includes the composite, the internal resistance of the cathode may further decrease. Consequently, an all solid secondary battery including the cathode may have improved cycling performance.

The size of Li₂S crystallites, obtained from an XRD spectrum of the composite of Li₂S and lithium salt, or the composite of Li₂S, lithium salt, and carbonaceous material, may be for example, about 20 nm or less, about 15 nm or less, or about 10 nm or less. The size of Li₂S crystallites obtained from the XRD spectrum of the composite may be, for example, about 1 nm to about 20 nm, about 1 nm to about 15 nm, or about 3 nm to about 10 nm. A decrease in the size of Li₂S crystallites may result in a further increase in a contact surface between Li₂S and the lithium salt. A further increase in the contact surface between Li₂S and the lithium salt may result in a further increase in the ionic conductivity of the composite of Li₂S and the lithium salt. Because the cathode includes the composite, the internal resistance of the cathode may further decrease. Consequently, an all solid secondary battery including the cathode may have improved cycling performance.

Because Li₂S has a relatively low ionic conductivity, a composite may be formed with a lithium salt to address this shortcoming. A composite of Li₂S and a lithium salt, or a composite of Li₂S, a lithium salt, and a carbonaceous material may provide improved ionic conductivity compared to Li₂S utilized alone. The content (e.g., amount) of Li₂S in the composite may be, with respect to a total weight of the composite of Li₂S and lithium salt, about 50 wt% to about 95 wt %, about 50 wt% to about 90 wt%, about 50 wt% to about 80 wt%, or about 50 wt% to about 70 wt%. With the composite having a Li₂S content (e.g., amount) in the above ranges, a cathode having improved ionic conductivity and durability may be prepared. The content (e.g., amount) of the lithium salt in the composite of Li₂S and the lithium salt may be, with respect to a total weight of the composite of Li₂S and the lithium salt, about 5 wt% to about 50 wt%, about 10 wt% to about 50 wt%, about 20 wt% to about 50 wt%, or about 30 wt% to about 50 wt%.

In the composite, the molar ratio of Li₂S to lithium salt may be, for example, about 50:50 to about 95:5, about 60:40 to about 95:5, about 60:40 to about 90:10, about 65:35 to about 90:10, about 65:35 to about 85:15, or about 70:30 to about 85:15. In the composite, the molar ratio of Li₂S to lithium salt may be, for example, about 50:50 to about 95:5, about 50:50 to about 90:10, about 50:50 to about 85:15, about 50:50 to about 80:20, about 50:50 to about 75:25, or about 50:50 to about 70:30. With the molar ratio of Li₂S to lithium salt being in the above ranges, the cycling performance of an all solid secondary battery including the composite cathode active material may further improve. If (e.g., when) the molar fraction of Li₂S is excessively high, the effect or aspect of the lithium salt on improving ionic conductivity may be negligible. If (e.g., when) the molar fraction of Li₂S is excessively high, the energy density of an all solid secondary battery including the composite cathode active material may deteriorate.

In the composite of Li₂S, lithium salt, and carbonaceous material, the content (e.g., amount) of the lithium salt may be, for example, about 1 wt% to about 40 wt%, about 5 wt% to about 35 wt%, about 10 wt% to about 35 wt%, about 15 wt% to about 35 wt%, about 20 wt% to about 35 wt%, or about 25 wt% to about 35 wt%, with respect to the total weight of the composite of Li₂S, the lithium salt, and carbonaceous material. If (e.g., when) the amount of the lithium salt excessively increases, the energy density of an all-solid secondary battery may deteriorate. If (e.g., when) the content (e.g., amount) of the lithium salt is too low, the ionic conductivity of the composite of Li₂S, a lithium salt and carbonaceous material may deteriorate, increasing the internal resistance of a dry cathode film. As a result, the cycling performance of an all solid secondary battery including the cathode may deteriorate.

In the composite of Li₂S, a lithium salt, and carbonaceous material, the molar ratio of Li₂S to lithium salt may be, for example, about 50:50 to about 95:5, about 60:40 to about 95:5, about 60:40 to about 90:10, about 65:35 to about 90:10, about 65:35 to about 85:15, or about 70:30 to about 85:15. In the composite of Li₂S, a lithium salt, and carbonaceous material, the molar ratio of Li₂S to lithium salt may be, for example, about 50:50 to about 95:5, about 50:50 to about 90:10, about 50:50 to about 85:15, about 50:50 to about 80:20, about 50:50 to about 75:25, or about 50:50 to about 70:30. Because the molar ratio of Li₂S to the lithium salt is in the above ranges, the cycling performance of an all solid secondary battery including the cathode may further improve. If (e.g., when) the molar fraction of Li₂S is excessively high, the aspect of the lithium salt on improving ionic conductivity may be negligible. If (e.g., when) the molar fraction of Li₂S is excessively high, the energy density of an all solid secondary battery including the cathode active material may deteriorate.

The composite of Li₂S and a lithium salt, or the composite of Li₂S, a lithium salt, and carbonaceous material may have an ionic conductivity at about 25 °C, for example, of about 1×10⁻⁵ S/cm or more, about 2×10⁻⁵ S/cm or more, about 4×10⁻⁵ S/cm or more, about 6×10⁻⁵ S/cm or more, about 8×10⁻⁵ S/cm or more, or about 1×10⁻⁴ S/cm or more. Ionic conductivity may be measured, for example, utilizing electrochemical impedance spectroscopy, a DC polarization method, and/or the like. Because the composite of Li₂S and a lithium salt has an ionic conductivity within the above ranges, the internal resistance of a cathode including the composite of Li₂S and the lithium salt may further decrease. The cycling performance of an all solid secondary battery including the cathode may improve.

The Li₂S-containing composite may further include a solid electrolyte. The solid electrolyte may further include a sulfide-based solid electrolyte.

The content (e.g., amount) of the complex of Li₂S and lithium salt may be, for example, about 0.1 wt% to about 20 wt%, about 0.5 wt% to about 20 wt%, about 0.5 wt% to about 15 wt%, about 0.5 wt% to about 10 wt%, or about 1 wt% to about 5 wt%, with respect to the total weight of the composite of Li₂S and the lithium salt and the sulfide-based solid electrolyte. The content (e.g., amount) of the composite of Li₂S and a lithium salt may be, for example, about 0.1 wt% to about 20 wt%, about 0.5 wt% to about 20 wt%, about 0.5 wt% to about 15 wt%, about 0.5 wt% to about 10 wt%, or about 1 wt% to about 5 wt% with respect to the total weight of the cathode. Because the cathode has a composite of Li₂S and a lithium salt in the above ranges, the durability of the cathode may further improve, and internal resistance may be further reduced. If (e.g., when) the content (e.g., amount) of the composite of Li₂S and lithium salt is too low, the aspect thereof may be insignificant. If (e.g., when) the content (e.g., amount) of the composite of Li₂S and lithium salt complex increases excessively, the internal resistance of the cathode may increase.

The cathode active material layer may include, for example, composite particles of Li₂S and a lithium salt, and sulfide-based solid electrolyte particles. For example, the size of the composite particles of Li₂S and a lithium salt may be smaller than the size of the sulfide-based solid electrolyte particles. The size of composite particles of Li₂S and a lithium salt may be, for example, about 90 % or less, about 80 % or less, about 60 % or less, about 40 % or less, about 20 % or less, or about 10 % or less with respect to the size of the sulfide-based solid electrolyte particles. The composite particles of Li₂S and a lithium salt may be arranged, for example, in voids among a plurality of sulfide-based solid electrolytes. Because the composite particles of Li₂S and a lithium salt are arranged in the voids among the plurality of sulfide-based solid electrolytes, the formation of pinholes in the cathode may be suppressed or reduced and the internal resistance of the cathode may be reduced. As a result, the durability of a cathode may improve.

The size of the sulfide-based solid electrolyte particles may be, for example, about 1 µm to about 10 µm, about 1 µm to about 8 µm, about 1 µm to about 6 µm, about 1 µm to about 5 µm, or about 1 µm to about 3 µm. Because the sulfide-based solid electrolyte particles have a size within the above ranges, the durability of a cathode may further improve. For example, the size of the sulfide-based solid electrolyte particles may be measured utilizing a laser diffraction method, a scanning electron microscope, and/or the like. For example, the size of the sulfide-based solid electrolyte particles may be an arithmetic mean value of particle diameters of a plurality of particles measured utilizing software from a scanning electron microscope image.

The particle size of the composite of Li₂S and lithium salt or the composite of Li₂S, lithium salt and carbonaceous material may be, for example, about 10 µm or less, about 8 µm or less, about 5 µm or less, about 2 µm or less, about 1.5 µm or less, or about 1 µm or less. The size of the composite particles may be, for example, about 1 µm to about 10 µm, about 2 µm to about 10 µm, about 2 µm to about 8 µm, or about 3 µm to about 8 µm. The size of the composite particles may be, for example, about 0.1 µm to about 10 µm, about 0.1 µm to about 8 µm, about 0.1 µm to about 5 µm, about 0.1 µm to about 2 µm, about 0.1 µm to about 1.5 µm, or about 0.1 µm to about 1 µm or less. With the composite particles having a size in the above ranges, the composite particles may be more easily arranged within pores among a plurality of sulfide-based solid electrolytes, thus suppressing pin-hole formation in the cathode and decreasing the internal resistance of the cathode. As a result, the durability of a cathode may improve. The size of the composite particles may be measured utilizing, for example, a laser diffraction method or a scanning electron microscope. For example, the particle diameter of the composite may be an arithmetic mean value of particle diameters of a plurality of particles measured utilizing software from a scanning electron microscope image.

The size of the Li₂S-containing composite particles, which is a composite cathode active material, may be, for example, about 10 µm or less, about 8 µm or less, about 5 µm or less, about 2 µm or less, about 1.5 µm or less, or about 1 µm or less. The size of the composite particles may be, for example, about 1 µm to about 10 µm, about 2 µm to about 10 µm, about 2 µm to about 8 µm, or about 3 µm to about 8 µm. The size of the composite particles may be, for example, about 0.1 µm to about 10 µm, about 0.1 µm to about 8 µm, about 0.1 µm to about 5 µm, about 0.1 µm to about 2 µm, about 0.1 µm to about 1.5 µm, or about 0.1 µm to about 1 µm or less.

The size of Li₂S particles included in the composite cathode active material, e.g., the size of Li₂S particles included in the composite, may be, for example, about 2 µm or less, about 1.5 µm or less, or about 1 µm or less. The size of the Li₂S particles may be, for example, about 0.1 µm to about 2 µm, about 0.1 µm to about 1.5 µm, or about 0.1 µm to about 1 µm. With the Li₂S particles having a size in the above ranges, volume changes during charging and discharging are suppressed or reduced, and thus, degradation of a composite cathode active material including the composite during charging and discharging may be suppressed or reduced. If (e.g., when) the size of the Li₂S particles excessively increases, volume changes of the composite during charging and discharging increase, and thus, degradation of a composite cathode active material including the composite may be accelerated. As a result, a secondary battery including the composite cathode active material may have improved cycling performance.

The size of Li₂S-containing composite particles may be measured utilizing, for example, a laser diffraction method or a scanning electron microscope. For example, the particle diameter of the Li₂S-containing composite may be an arithmetic mean value of particle diameters of a plurality of particles measured utilizing software from a scanning electron microscope image.

The ratio of the size of sulfide-based solid electrolyte particles and the size of composite particles of Li₂S and a lithium salt may be, for example, about 2:1 to about 200:1, about 2:1 to about 100:1, or about 2:1 to about 50:1. Because the ratio of the size of sulfide-based solid electrolyte particles and the size of composite particles of Li₂S and a lithium salt is within the above ranges, defect formation in the cathode may be suppressed or reduced and the durability of the cathode may further improve. When the ratio of the size of sulfide-based solid electrolyte particles and the size of composite particles of Li₂S and a lithium salt is too small, the porosity of a cathode may excessively increase, thus deteriorating the durability of the cathode. If (e.g., when) the ratio between the size of the sulfide-based solid electrolyte particles and the size of the composite particles of Li₂S and a lithium salt is too large, substantially uniform dispersion of the composite particles of Li₂S and the lithium salt within the cathode may be difficult.

If (e.g., when) a cathode containing the composite is utilized, there is no need to utilize a lithium metal anode as the anode, thus enabling the use of an anodeless solid secondary battery (e.g., excluding the lithium metal anode), and as such, an all solid secondary battery with improved energy density may be provided. Further, with the composite cathode active material including the above composite, an all solid secondary battery including the composite cathode active material may have improved cycling performance. For example, an all solid secondary battery including the composite cathode active material may have improved rate capability.

The solid electrolyte in the cathode active material layer may be a sulfide-based solid electrolyte, for example. The solid electrolyte included in the cathode may be identical to or different from a solid electrolyte included in the electrolyte layer. The solid electrolyte included in the cathode active material layer may have a smaller median particle diameter D50 than that of the solid electrolyte included in the electrolyte layer. For example, the median particle diameter D50 of the solid electrolyte included in the cathode active material layer may be about 90 % or less, about 80 % or less, about 70 % or less, about 60 % or less, about 50 % or less, about 40 % or less, about 30 % or less, or about 20 % or less, relative to the median particle diameter D50 of the solid electrolyte included in the electrolyte layer. D50 average particle diameter may be, for example, a median particle diameter (D50). Median particle diameter (D50) may refer to a particle size corresponding to a cumulative volume of about 50 vol% as counted from the smallest particle size in a particle size distribution measured by a laser diffraction method.

With respect to about 100 parts by weight of the cathode active material layer, the solid electrolyte may be included in an amount of about 10 parts by weight to about 60 parts by weight, about 10 parts by weight to about 50 parts by weight, about 20 parts by weight to about 50 parts by weight, or about 30 parts by weight to about 50 parts by weight.

### Solid Secondary Battery

An all solid secondary battery according to embodiments may include a cathode; an anode; and a solid electrolyte layer arranged between the cathode and the anode, wherein the cathode may include the cathode described above.

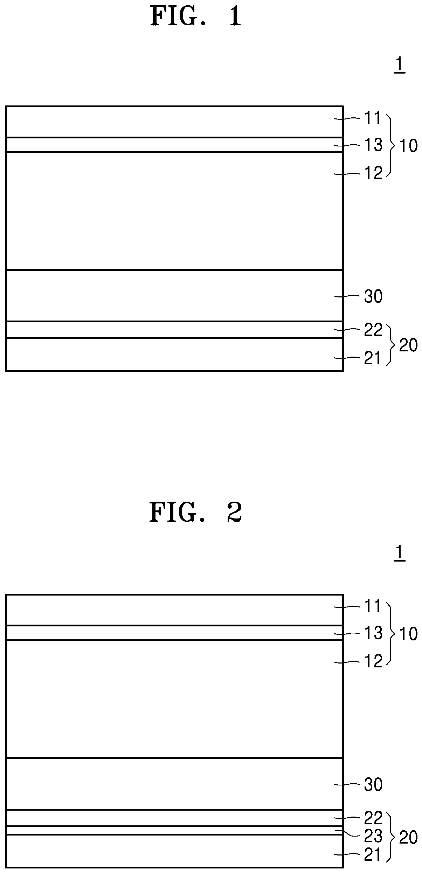

Referring to FIGS. 1 to 5, an all solid secondary battery 1 may include a cathode 10; an anode 20; and a solid electrolyte layer 30 arranged between the cathode 10 and the anode 20. The cathode 10 may include the cathode according to embodiments.

### Cathode

### Cathode: Cathode Active Material

Referring to FIGS. 1 to 5, the cathode 10 may include a cathode current collector 11; a carbon coating layer 13 arranged on one side or both (e.g., opposite)) sides of the cathode current collector 11, and a cathode active material layer 12 arranged on an upper part thereof. The cathode active material layer 12 may include a Li₂S-containing composite as a cathode active material. In some embodiments, an interlayer may be further arranged between the carbon coating layer 13 and the cathode active material layer 12 located on the upper part thereof.

The cathode active material layer 12 may further include other suitable cathode active materials, in addition to the composite cathode active materials above.

The other cathode active materials may include, for example, a Li₂S-containing composite. Examples of the Li₂S-containing composite may include a composite of Li₂S and carbon, a composite of Li₂S, carbon, and a solid electrolyte, a composite of Li₂S and a solid electrolyte, a composite of Li₂S, a lithium salt, and carbon, a composite of Li₂S and a metal carbide, a composite of Li₂S, carbon, and a metal carbide, a composite of Li₂S and a metal nitride, a composite of Li₂S, carbon, and a metal nitride, or a combination thereof.

The composite of Li₂S and carbon may include a carbon. The carbon may be, for example, any carbon-containing material available as a conductive material in the art. The carbon may be, for example, crystalline carbon, amorphous carbon, or a combination thereof. The carbon may be, for example, a fired product of a carbon precursor. The carbon may be, for example, a carbon nanostructure. Examples of the carbon nanostructure may include a one-dimensional carbon nanostructure, a two-dimensional carbon nanostructure, a three-dimensional carbon nanostructure, or a combination thereof. Carbon nanostructures may include, for example, carbon nanotubes, carbon nanofibers, carbon nanobelts, carbon nanorods, graphene, graphene oxide (GO), reduced graphene oxide (rGO), graphene balls (GB), or a combination thereof. The carbon may be, for example, porous carbon or non-porous carbon. The composite of Li₂S and carbon may be prepared by methods including, but not limited to a dry method, a wet method, or a combination thereof. Further, methods available in the art for preparing a composite of Li₂S and carbon include milling, heat treatment, deposition, and/or the like, but without being limited to the aforementioned methods, any method available in the art may be utilized.

The composite of Li₂S, carbon, and solid electrolyte composite may include a carbon and a solid electrolyte. For details of the carbon, refer to the composite of Li₂S and carbon described above. The solid electrolyte may be, any material available as an ionically conductive material in the art. The solid electrolyte may be, for example, an inorganic solid electrolyte. The solid electrolyte may be, for example, a crystalline solid electrolyte, an amorphous solid electrolyte, or a combination thereof. The solid electrolyte may be, for example, a sulfide-based solid electrolyte, an oxide-based solid electrolyte, or a combination thereof. The sulfide-based solid electrolyte may contain, for example, Li, S, and P, and may optionally further contain a halogen element. The sulfide-based solid electrolyte may be of (e.g., selected from among) sulfide-based solid electrolytes that are utilized in a solid electrolyte layer. The sulfide-based solid electrolyte may have an ionic conductivity of about 1×10⁻⁵ S/cm or more at room temperature, for example. The sulfide-based solid electrolyte may be, for example, at least one of (e.g., selected from among) Li₃PO₄-Li₂SO₄, Li₂S-P₂S₅, and Li₂S-P₂S₅-LiX, wherein X is a halogen element; Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, and Li₂S-P₂S₅-ZₘSₙ, wherein m and n each are a positive number, and Z is Ge, Zn or Ga; Li₂S-GeS₂, Li₂S-SiS₂-Li₃PO₄, and Li₂S-SiS₂-LiₚMO_{q}, wherein p and q each are a positive number and M is P, Si, Ge, B, Al, Ga or In; Li₇₋ₓPS₆₋ₓClₓ, wherein 0≤x≤2; Li₇₋ₓPS₆₋ₓBrₓ, wherein 0≤x≤2; and Li₇₋ₓPS₆₋ₓIₓ, wherein 0≤x≤2. The oxide-based solid electrolyte may contain, for example, Li, O, and a transition metal element, and may optionally further contain other elements. For example, the oxide-based solid electrolyte may be a solid electrolyte having an ionic conductivity of about 1×10⁻⁵ S/cm or more at room temperature. The oxide-based solid electrolyte may be of (e.g., selected from among) oxide-based solid electrolytes that are utilized in a solid electrolyte layer. The solid electrolyte may be a mixture of a sulfide-based solid electrolyte and a lithium salt, for example. For example, the solid electrolyte may be a mixture of Li₃PO₄-Li₂SO₄ and a binary lithium salt or a mixture of Li₃PO₄-Li₂SO₄ and a ternary lithium salt.

The composite of Li₂S and solid electrolyte may include a solid electrolyte. For details of the solid electrolyte, refer to the composite of Li₂S, carbon, and solid electrolyte above.

A composite of Li₂S and carbon may include a lithium salt compound and carbon. The lithium salt compound does not contain sulfur (S) atoms, for example. For example, the lithium salt compound may be a binary compound composed of lithium and one element of (e.g., selected from among) Groups 13 to 17 of the Periodic Table of the Elements. The binary compound may include, for example, one or more of (e.g., selected from among) LiF, LiCl, LiBr, Lil, LiH, Li₂S, Li₂O, Li₂Se, Li₂Te, LisN, LisP, LisAs, LisSb, LiI₃, and LiBs. For example, the lithium salt compound may be a ternary compound composed of lithium and two or more elements of (e.g., selected from among) Groups 13 to 17 of the Periodic Table of the Elements. The ternary compound may include, for example, one or more of (e.g., selected from among) Li₃OCl, LiPF₆, LiBF₄, LiSbF₆, LiAsF₆, LiClO₄, LiAlO₂, LiAlCl₄, LiNO₃, Li₂CO₃, LiBH₄, Li₂SO₄, LisBOs, Li₃PO₄, Li₄NCl, Li₅NCl₂, and Li₃BN₂. In some embodiment, the lithium salt compound may be at least one lithium halide compound of (e.g., selected from among) LiF, LiCl, LiBr, and Lil. For details of the carbon, refer to the composite of Li₂S and carbon described above.

The composite of Li₂S and metal carbide may include a metal carbide. The metal carbide may be, for example, a two-dimensional metal carbide. A two-dimensional metal carbide may be, for example, MXene. The two-dimensional metal carbide may be represented by, for example, Mₙ₊₁CₙTₓ (M is a transition metal, T is a terminal group, T is O, OH and/or F, n = 1, 2, or 3, and x is the number of terminal groups). The two-dimensional metal carbide may be, for example, Ti₂CTₓ, (Ti_{0.5}, Nb_{0.5})₂CTₓ, Nb₂CTₓ, V₂CTₓ, Ti₃C₂Tₓ, (V_{0.5}, Cr_{0.5})₃C₂Tₓ, Ti₃CNTₓ, Ta₄C₃Tₓ, Nb₄C₃Tₓ, or a combination thereof. The surface of the two-dimensional metal carbide may be terminated by O, OH, and/or F.

The composite of Li₂S, carbon, and a metal carbide may include carbon and a metal carbide. For details of the carbon, refer to the composite of Li₂S and carbon described above. For details of the metal carbide, refer to the composite of Li₂S and a metal carbide described above.

The composite of Li₂S and a metal nitride may include a metal nitride. The metal nitride may be, for example, a two-dimensional metal nitride. The two-dimensional metal nitride may be represented by, for example, Mₙ₊₁NₙTₓ (M is a transition metal, T is a terminal group, T is O, OH and/or F, n = 1, 2, or 3, and x is the number of terminal groups). The surface of the two-dimensional metal nitride may be terminated by O, OH, and/or F.

The composite of Li₂S, carbon, and a metal nitride may include carbon and a metal nitride. For details of the carbon, refer to the composite of Li₂S and carbon described above. For details of the metal carbide, refer to the composite of Li₂S and a metal nitride described above.

The size of the cathode active material may be, for example, about 0.1 µm to about 50 µm, about 0.5 µm to about 30 µm, about 0.5 µm to about 20 µm, or about 1 µm to about 10 µm. The size of Li₂S may be, for example, about 1 nm to about 10 µm, about 10 nm to about 5 µm, about 10 nm to about 3 µm, or about 10 nm to about 1 µm. The size of the Li₂S-containing composite may be, for example, about 0.1 µm to about 50 µm, about 0.5 µm to about 30 µm, about 0.5 µm to about 20 µm, or about 1 µm to about 10 µm.

The cathode active material layer 12 may further include, for example, a sulfide-based compound distinguished from the cathode active materials described above. The sulfide-based compound may be, for example, a compound including sulfur and a metal element other than Li. The sulfide-based compound may be, for example, a compound including sulfur and a metal element with an atomic weight of about 10 or more, that belongs to Groups 1 to 14 in the Periodic Table of the Elements. The sulfide-based compound may be, for example, FeS₂, VS₂, NaS, MnS, FeS, NiS, CuS, or a combination thereof. As the cathode active material layer further includes a sulfide-based compound, cycling performance of an all solid secondary battery may further improve. The amount of such a sulfide-based compound included in the cathode active material layer 12 may be about 10 wt% or less, about 5 wt% or less, about 3 wt% or less, or about 1 wt% or less, with respect to the total weight of the cathode active material layer 12.

The form of the cathode active material may have a particulate form (in a form of particles), such as a perfect sphere, an oval sphere, and/or the like. The particle diameter of the cathode active material is not limited and may be within a range applicable to a cathode active material of a suitable or comparable solid secondary battery. The content (e.g., amount) of the cathode active material in the cathode layer 10 is not limited and may be within a range applicable to a cathode layer of a suitable or comparable solid secondary battery. The content (e.g., amount) of the cathode active material included in a cathode active material layer 12 may be, for example, about 30 wt% to about 99 wt%, about 30 wt% to about 90 wt%, about 30 wt% to about 80 wt%, about 30 wt% to about 70 wt%, or about 30 wt% to about 50 wt%, with respect to the total weight of the cathode active material layer 12.

### Cathode: Conductive Material

The cathode active material layer 12 may further include a conductive material. The conductive material may be, for example, a carbonaceous conductive material, a metal-based conductive material, or a combination thereof. Examples of the carbonaceous conductive material may include graphite, carbon black, acetylene black, Ketjen black, carbon fibers, and a combination thereof. However, the carbonaceous conductive material is not limited to the aforementioned examples and may be any material available as a carbonaceous conductive material in the art. The metal-based conductive material may be metal powder, metal fibers, or a combination thereof, but without being limited thereto may any metal-based conductive material available in the art. For example, the amount of the conductive material included in the cathode active material layer 12 may be about 1 wt% to about 30 wt%, about 1 wt% to about 20 wt%, about 1 wt% to about 10 wt%, with respect to the total weight of the cathode active material layer 12.

### Cathode: Binder

The cathode active material layer 12 may further include a binder. The binder may be, for example, styrene butadiene rubber (SBR), polytetrafluoroethylene, polyvinylidene fluoride, polyethylene, and/or the like, but without being limited to the aforementioned examples, may utilize any material utilized as a binder in the art. The amount of the binder included in the cathode active material layer 12 may be, for example, about 1 wt% to about 10 wt% with respect to the total weight of the cathode active material layer 12. The binder may not be provided.

### Cathode: Other Additives

The cathode active material layer 12 may further include, for example, an additive such as a filler, a coating agent, a dispersing agent, and an ionically conductive aid, in addition to the cathode active material, the solid electrolyte, the binder, and the conductive material described above.

For the filler, coating agent, dispersing agent, and ion-conducting aid that may be included in the cathode active material layer 12, any suitable material generally utilized in an electrode of an all solid secondary battery may be utilized.

### Cathode: Cathode Current Collector

For example, the cathode current collector 11 may utilize a plate, a foil, and/or the like, formed of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The cathode current collector 11 may not be provided. The cathode current collector 11 may have a thickness of, for example, about 1 µm to about 100 µm, about 1 µm to about 50 µm, about 5 µm to about 25 µm, or about 10 µm to about 20 µm.

For example, the cathode current collector 11 may include a base film, and a metal layer arranged on one side or both (e.g., opposite) sides of the base film. For example, the base film may include a polymer. For example, the polymer may be a thermoplastic polymer. For example, the polymer may include polyethylene terephthalate (PET), polyethylene (PE), polypropylene (PP), polybutylene terephthalate (PBT), polyimide (PI), or a combination thereof. For example, the base film may be an insulator. As the base film includes an insulating thermoplastic polymer, in the event of a short circuit, the base film is softened or liquefied, blocking the operation of the battery, to thereby prevent or reduce a rapid increase in electrical current. For example, the metal layer may include indium (In), copper (Cu), magnesium (Mg), stainless steel, titanium (Ti), iron (Fe), cobalt (Co), nickel (Ni), zinc (Zn), aluminum (Al), germanium (Ge), or an alloy thereof. In the event of an overcurrent, the metal layer may be disconnected, thus acting as an electrochemical fuse to provide protection against short circuits. A limiting current and a maximum current may be controlled or selected through controlling a thickness of the metal layer. The metal layer may be plated or deposited on the base film. As the thickness of the metal layer decreases, the limiting current and/or maximum current of the cathode current collector 11 decrease, and therefore, the stability of the lithium battery during a short circuit may improve. A lead-tab may be added on the metal layer for connection to the outside. The lead-tab may be welded to the metal layer or a metal layer/base film laminate by ultrasonic welding, laser welding, spot welding, and/or the like. As the base film and/or the metal layer melt during welding, the metal layer may be electrically connected to the lead-tab. For stronger welding between the metal layer and the lead-tab, a metal chip may be added between the metal layer and the lead-tab. The metal chip may be a flake of the same material as the metal of the metal layer. For example, the metal chip may be a metal foil, a metal mesh, and/or the like. For example, the metal chip may be an aluminum foil, a copper foil, an SUS (stainless steel) foil, and/or the like. By welding the metal layer with the lead-tab after placing the metal chip on the metal layer, the lead-tab may be welded to a metal chip/metal layer laminate or a metal chip/metal layer/base film laminate. As the base film, the metal layer, and/or the metal chip melt during welding, the metal layer or the metal layer/metal chip laminate may be electrically connected to the lead-tab. A metal chip and/or a lead-tab may be further added on a part of the metal layer. For example, the base film may have a thickness of about 1 µm to about 50 µm, about 1.5 µm to about 50 µm, about 1.5 µm to about 40 µm, or about 1 µm to about 30 µm. With the base film having a thickness within the above ranges, the weight of the electrode assembly may be more effectively reduced. For example, the base film may have a melting point of about 100 °C to about 300 °C, about 100 °C to about 250 °C or less, or about 100 °C to about 200 °C. Because the base film has a melting point within the above ranges, the base film may easily melt and be bonded to the lead-tab while welding the lead-tab. To improve adhesion between the base film and the metal layer, a surface treatment such as corona treatment may be performed on the base film. For example, the metal layer may have a thickness of about 0.01 µm to about 3 µm, about 0.1 µm to about 3 µm, about 0.1 µm to about 2 µm, or about 0.1 µm to about 1 µm. With the metal layer having a thickness within the above ranges, the electrode assembly may provide stability while maintaining conductivity. For example, the metal chip may have a thickness of about 2 µm to about 10 µm, about 2 µm to about 7 µm, or about 4 µm to about 6 µm. With the metal chip having a thickness within the above ranges, the metal layer and the lead-tab may be more easily connected. Because the cathode current collector 11 has the above structure, the weight of the cathode may be reduced, and as a result, energy density of the cathode and the lithium battery may improve.

### Cathode: Inactive Member

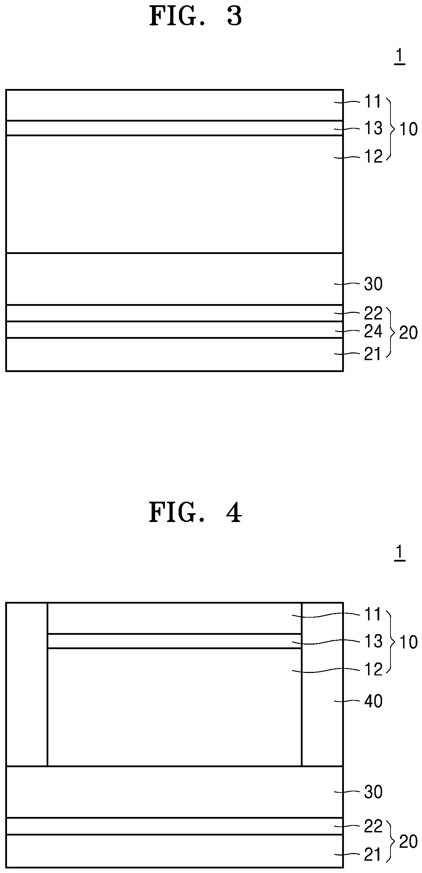

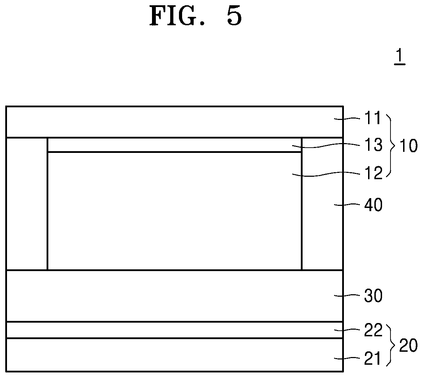

Referring to FIGS. 4 and 5, the cathode 10 may include a cathode current collector 11, a carbon coating layer 13 arranged on at least one surface (e.g., one or both (e.g., opposite) surfaces) of the cathode current collector 11, and a cathode active material layer 12 arranged on the cathode current collector 11. An interlayer may be further arranged between the carbon coating layer 13 and the cathode active material layer 12 located thereon.

On at least one side surface (e.g., one or both (e.g., opposite) side surfaces) of the cathode 10, an inactive member 40 may be arranged. Referring to FIG. 4, the inactive member 40 may be arranged on at least one side surface (e.g., one or both (e.g., opposite) side surfaces) of the cathode current collector 11 and the cathode active material layer 12. Referring to FIG. 5, the inactive member 40 may be arranged on at least one side surface (e.g., one or both (e.g., opposite) side surfaces) of the cathode active material layer 12 and arranged between the solid electrolyte layer 30 and the cathode current collector 11 opposing the solid electrolyte layer 30. In some embodiments, inactive member 40 may not be arranged on one side surface of the cathode current collector 11.

By including the inactive member 40, cracking of the solid electrolyte layer 30 is prevented or reduced if (e.g., when) manufacturing and/or during charging and discharging the all solid secondary battery 1 and as a result, the cycling performance of the all solid secondary battery 1 may improve. In the all solid secondary battery 1 that does not include the inactive member 40, due to a substantially non-uniform pressure applied to the electrolyte layer 30 that is in contact with the cathode 10 during manufacturing and/or charging and discharging of the all solid secondary battery 1, cracks may form (or provide) in the electrolyte layer 30, and due to growth of lithium metal caused thereby, the likelihood of a short circuit occurring may increase.

In the all solid secondary battery 1, the thickness of the inactive member 40 may be greater than the thickness of the cathode active material layer 12, or equal to the thickness of the cathode active material layer 12. In other embodiments, in the all solid secondary battery 1, the thickness of the inactive member 40 may be substantially the same as the thickness of the cathode 10. Because the thickness of the inactive member 40 is equal to the thickness of the cathode 10, a substantially uniform pressure is applied between the cathode 10 and the electrolyte layer 30, and as the cathode 10 and the electrolyte layer 30 are sufficiently flush against each other, interfacial resistance between the cathode 10 and the electrolyte layer 30 may decrease. Further, as the electrolyte layer 30 is sufficiently sintered during the press manufacturing process of the all solid secondary battery 1, the electrolyte layer 30 and the all solid secondary battery 1 including the same may have decreased internal resistance.

The inactive member 40 may be in contact with the electrolyte layer 30 while around (e.g., surrounding) a side surface of the cathode 10. As the inactive member 40 is in contact with the electrolyte layer 30 while around (e.g., surrounding) a side surface of the cathode 10, in the electrolyte layer 30 that is not in contact with the cathode layer 10, cracking of the electrolyte layer 30 caused by a pressure difference during the press process may be effectively prevented or reduced. The inactive member 40, while around (e.g., surrounding) a side surface of the cathode layer 10, may be separated from the anode layer 20, more specifically, from an anode active material layer 22. The inactive member 40 may be in contact with the electrolyte layer 30 while around (e.g., surrounding) a side surface of the cathode 10, and may be apart from the anode 20. The risk of short circuits due to the cathode 10 and the first anode active material layer 22 coming into physical contact with each other, or overcharging of lithium, and/or the like may be then reduced. For example, because the inactive member 40 is (e.g., simultaneously) arranged on one side surface of the cathode active material layer and one side surface of the cathode current collector 11, the risk of short circuiting due to the cathode current collector 11 and the anode 20 coming into contact may be effectively inhibited.

Referring to FIGS. 4 and 5, the inactive member 40 may extend from one side surface of a cathode layer 10 to an end portion of the electrolyte layer 30. As the inactive member 40 extends to the end portion of the electrolyte layer 30, formation of cracks at the end portion of the electrolyte layer 30 may be inhibited. The end portion of the electrolyte layer 30 may be an outermost portion that is contiguous with a side surface of the electrolyte layer 30. The inactive member 40 may extend up to the outermost portion that is contiguous with the side surface of the electrolyte layer 30. The inactive member 40 may be apart from the anode 20, more specifically, from the first anode active material layer 22. The inactive member 40 may extend to the end portion of the electrolyte layer 30 but may not come in contact with the anode 20. For example, the inactive member 40 may fill the space that extends from one side surface of the cathode 30 to the end portion of the electrolyte layer 30.

Referring to FIGS. 4 and 5, a width of the inactive member 40 extending from one side surface of the cathode 10 to an end portion of the electrolyte layer 30 may be, for example, about 1 % to about 30 %, about 1 % to about 25 %, about 1 % to about 20 %, about 1 % to about 20 %, about 1 % to about 15 %, about 1 % to about 10 %, or about 1 % to about 5 %, with respect to a width between one side surface of the cathode 10 and the other side surface opposite to the one side surface. If (e.g., when) the width of the inactive member 40 is excessively large, the energy density of the all solid secondary battery 1 may decrease. If (e.g., when) the width of the inactive member 40 is too small, the aspect of placing the inactive member 40 may be negligible.

The surface area of the cathode 10 may be smaller than the surface area of the electrolyte layer 30 that is in contact with the cathode 10. The inactive member 40 compensates for the difference in surface area between the cathode 10 and the electrolyte layer 30, by being around (e.g., surrounding) the side surface of the cathode 10. Because the surface area of the inactive member 40 compensates for the difference between the surface area of the cathode 10 and the surface area of the electrolyte layer 30, cracking of the electrolyte layer 30 caused by a pressure difference during the pressing process may be effectively suppressed or reduced. For example, the sum of the surface area of the cathode 10 and the surface area of the inactive member 40 may be equal to the surface area of the electrolyte layer 30. For example, the electrolyte layer 30 may be a solid electrolyte layer.

For example, the surface area of the cathode 10 may be less than about 100 %, less than about 99 %, less than about 98 %, less than about 97 %, less than about 96 %, or less than about 95 %, with respect to the surface area of the electrolyte layer 30. The surface area of the cathode 10 may be, for example, about 50 % to about 100 % or less, about 50 % to about 99 %, about 55 % to about 98 %, about 60 % to about 97 %, about 70 % to about 96 %, about 80 % to about 95 %, or about 85 % to about 95 %, with respect to the surface area of the electrolyte layer 30.

If (e.g., when) the surface area of the cathode 10 is equal to or larger than the surface area of the electrolyte layer 30, the likelihood of a short circuit occurring due to a physical contact between the cathode 10 and the first anode active material layer 22, or a short circuit occurring due to overcharging of lithium, and/or the like increases. For example, the surface area of the cathode 10 may be equal to the surface area of the cathode active material layer 12. For example, the surface area of the cathode 10 may be equal to the surface area of the cathode current collector 11.

For example, the surface area of the inactive member 40 may be about 50 % or less, about 40 % or less, about 30 % or less, about 20 % or less, or about 10 % or less, with respect to the surface area of the cathode 10. For example, the surface area of the inactive member 40 may be about 1 % to about 50 %, about 5 % to about 40 %, about 5 % to about 30 %, about 5 % to about 20 %, or about 5 % to about 15 %, with respect to the surface area of the cathode 10.

The surface area S1 of the cathode 10 is smaller than the surface area S4 of the anode current collector 21. For example, the surface area S1 of the cathode 10 may be less than about 100 %, less than about 99 %, less than about 98 %, less than about 97 %, less than about 96 %, or less than about 95 %, with respect to the surface area S4 of the anode current collector 21. For example, the surface area S1 of the cathode 10 may be less than about 50 % to about 100%, about 50 % to about 99 %, about 55 % to about 98 %, about 60 % to about 97 %, about 70 % to about 96 %, about 80 % to about 95 %, or about 85 % to about 95 %, with respect to the surface area S4 of the anode current collector 21. For example, the surface area S4 of the anode current collector 21 may be equal to the surface area of the anode 20. For example, the surface area S4 of the anode current collector 21 may be equal to the surface area of the first anode active material layer 22.

As utilized herein, "identical" and/or "same" area, length, width, thickness, and/or shape or form, unless otherwise indicated that the area, length, width, thickness, and/or shape or form are deliberately varied to differ from each other, may include "substantially identical" and "substantially the same" area, length, width, thickness, and/or shape or form. For example, the "identical" and/or "same" area, length, width, thickness, and/or shape or form may include instances where an unintended difference in the area, length, width, thickness, and/or shape or form is within a range of less than 3 %, less than 2 %, less than 1 %, less than 0.5 %, or less than 0.1 %,

For example, the thickness of the inactive member 40 may be more than the thickness of the first anode active material layer 22. For example, the thickness of the first anode active material layer 22 may be about 50 % or less, about 40 % or less, about 30 % or less, about 20 % or less, or about 10 % or less with respect to the thickness of the inactive member 40. For example, the thickness of the first anode active material layer 22 may be about 1 % to about 50 %, about 1 % to about 40 %, about 1 % to about 30 %, about 1 % to about 20 %, or about 1 % to about 10 % with respect to the thickness of the inactive member 40.

The inactive member 40 may be, for example, a gasket. Using a gasket as the inactive member 40 may effectively inhibit crack formation in the electrolyte layer 30 due to a pressure differential during the press process.

For example, the inactive member 40 may have a monolayer structure. In other embodiments, the inactive member 40 may have a multilayer structure. In the inactive member 40 having a multilayer structure, each layer may have a different composition. The inactive member 40 having a multilayer structure may have, for example, a two-layer structure, a three-layer structure, a four-layer structure, or a five-layer structure. The inactive member 40 having a multilayer structure may include, for example, one or more adhesive layers and one or more support layers. For example, the adhesive layers may effectively prevent or reduce separation between the cathode 10 and the electrolyte layer 30 due to volume changes of the cathode 10 that occur during charging and discharging of the cathode 10 and may improve a film strength of the inactive member 40 by providing adhesion between the support layer and other layers. The support layer may provide support to the inactive member 40, prevent or reduce non-uniformity of the pressure exerted on the electrolyte layer 30 during the press process or charging and discharging processes, and prevent or reduce deformations in shape of the all solid secondary battery 1 being produced.

The inactive member 40 may have, for example, a flame-retardant inactive member. Flame retardancy provided by the flame-retardant inactive member may reduce the risk of thermal runaway and explosion of the all solid secondary battery 1. Consequently, the safety of the all solid secondary battery 1 may further improve. As the flame-retardant inactive member absorbs residual moisture inside the all solid secondary battery 1, degradation of the all solid secondary battery 1 may be prevented or reduced, improving the lifetime characteristics of the all solid secondary battery 1.

The flame-retardant inactive member may include, for example, a matrix and a filler. For example, the matrix may include a substrate and a reinforcing material. For example, the matrix may include a fibrous substrate and a fibrous reinforcing material. As the matrix includes the substrate, the matrix may have elasticity. The matrix may be placed at one or more suitable locations and effectively accommodate volume changes of the all solid secondary battery 1 during charging and discharging. The substrate included in the matrix may include, for example, a first fibrous material. As the substrate includes the first fibrous material, volume changes of the cathode 10 during charging and discharging of the all solid secondary battery 1 may be effectively accommodated, and deformation of the inactive member 40 caused by volume changes of the cathode 10 may be effectively suppressed or reduced. For example, the first fibrous material may be a material having an aspect ratio of about 5 or more, about 20 or more, or about 50 or more. For example, the first fibrous material may be a material having an aspect ratio of about 5 to about 1,000, about 20 to about 1,000, or about 50 to about 1,000. For example, the first fibrous material may be an insulating material. Because the first fibrous material is an insulating material, a short circuit that may occur between the cathode 10 and the anode 20 due to lithium dendrites and/or the like during charging and discharging of the all solid secondary battery 1 may be effectively prevented or reduced. Examples of the first fibrous material may include at least one of (e.g., selected from among) pulp fibers, insulating polymer fibers, and ionically conductive polymer fibers. As the matrix includes the reinforcing material, strength of the matrix may improve. The matrix may serve to prevent or reduce the all solid secondary battery 1 from undergoing an excessive volume change during charging and discharging and protect the all solid secondary battery 1 from deformation. The reinforcing material included in the matrix may include, for example, a second fibrous material. As the reinforcing material includes the second fibrous material, a more substantially uniform increase of the strength of the matrix may be achieved. For example, the second fibrous material may be a material having an aspect ratio of about 3 or more, about 5 or more, or about 10 or more. For example, the first fibrous material may be a material having an aspect ratio of about 3 to about 100, about 5 to about 100, or about 10 to about 100. For example, the second fibrous material may be a flame-retardant material. Because the second fibrous material is a flame-retardant material, a fire caused by thermal runaway during charging and discharging of the all solid secondary battery 1 or by an external impact may be effectively suppressed or reduced. For example, the second fibrous material may be glass fibers, metal oxide fibers, ceramic fibers, and/or the like.

The flame-retardant inactive member may include a filler in addition to the matrix. The filler may be arranged inside the matrix, may be arranged on a surface of the matrix, or may be arranged both (e.g., simultaneously) inside and on a surface of the matrix. Examples of the filler may include an inorganic material. The filler included in the flame-retardant inactive member may be for example, a moisture getter. For example, the filler may remove residual moisture from the all solid secondary battery 1 by adsorbing to moisture at a temperature of less than about 100 °C, thereby preventing or reducing degradation of the all solid secondary battery 1. Further, if (e.g., when) the temperature of the all solid secondary battery 1 increases to about 150 °C or higher due to thermal runaway caused by an external impact, or during charging and discharging of the all solid secondary battery 1, the filler may release the adsorbed moisture to effectively prevent or reduce the all solid secondary battery 1 from catching fire. For example, the filer may be a flame retardant. For example, the filler may be a metal hydroxide having hygroscopicity. The metal hydroxide included in the filler may be, for example, Mg(OH)₂, Fe(OH)₃, Sb(OH)₃, Sn(OH)₄, Tl(OH)₃, Zr(OH)₄, Al(OH)₃, or a combination thereof. The amount of the filler included in the flame-retardant inactive member may be, for example, about 10 parts by weight to about 80 parts by weight, about 20 parts by weight to about 80 parts by weight, about 30 parts by weight to about 80 parts by weight, about 40 parts by weight to about 80 parts by weight, about 50 parts by weight to about 80 parts by weight, about 60 parts by weight to about 80 parts by weight, or about 65 parts by weight to about 80 parts by weight, with respect to 100 parts by weight of a flame-retardant inactive member 40.

The flame-retardant inactive member may include a binder, for example. The binder may include, for example, a curable polymer or a non-curable polymer. The curable polymer may be a polymer that cures by heat and/or pressure. For example, the curable polymer may be solid at room temperature. Examples of the flame-retardant inactive member 40 may include a heat-press curable film and/or a cured product thereof. The thermal-press curable polymer of the heat-press curable film may be TSA-66 by Toray, for example.

In addition to the substrate, the reinforcing material, the filler, and the binder described above, the flame-retardant inactive member may further include other materials. For example, the flame-retardant inactive member may further include at least one of (e.g., selected from among) paper, an insulating polymer, an ionically conductive polymer, an insulating inorganic material, an oxide-based solid electrolyte, and a sulfide-based solid electrolyte. The insulating polymer may be an olefin-based polymer such as polypropylene (PP), polyethylene (PE), and/or the like.

The substrate or the reinforcing material included in the flame-retardant inactive member may have a density of, for example, about 10 % to about 300 %, about 10 % to about 150 %, about 10 % to about 140 %, about 10 % to about 130 %, or about 10 % to about 120 %, relative to the density of the cathode active material included in a cathode active material layer 12.

The inactive member 40 may be a member not containing any material with electrochemical activity, i.e., electrode active material. The electrode active material may be a material that absorbs/desorbs lithium. The inactive member 40 may be a member composed of a material other than electrode active materials that is utilized in the art.

### Anode

### Anode: Anode Active Material

Referring to FIGS. 1 to 5, the anode 20 may include an anode current collector 21 and a first anode active material layer 22 arranged on one surface of the anode current collector 21.

The first anode active material layer 22 may be, for example, a metal layer, and the metal layer may include lithium or a lithium alloy.

The first anode active material layer 22 may include, for example, an anode active material and a binder.

The anode active material included in the first anode active material layer 22 may be, for example, an anode material capable of forming (or providing) an alloy or a compound with lithium.

The anode active material included in the first anode active material layer 22 may have, for example, a particulate form (e.g., in a form of particles). The anode active material having a particulate form (e.g., in a form of particles) may have an average particle diameter of, for example, about 4 µm or less, about 3 µm or less, about 2 µm or less, about 1 µm or less, about 500 nm or less, about 300 nm or less, or about 100 nm or less. For example, the anode active material having a particulate form (e.g., in a form of particles) may have an average particle diameter of about 10 nm to about 4 µm, about 10 nm to about 3 µm, about 10 nm to about 2 µm, about 10 nm to about 1 µm, about 10 nm to about 500 nm, about 10 nm to about 300 nm, or about 10 nm to about 100 nm. With the anode active material having an average particle diameter within the above ranges, reversible absorption and/or desorption of lithium during charging/discharging may be facilitated. The average particle diameter of the anode active material may be, for example, a median particle diameter (D50) as measured by a laser-type or kind particle size distribution analyzer.

The anode active material included in the first anode active material layer 22 may include, for example, at least one of (e.g., selected from among) a carbonaceous anode active material and a metal or metalloid anode active material.

The carbonaceous anode active material may include, for example, amorphous carbon, crystalline carbon, porous carbon, or a combination thereof.

The carbonaceous anode active material may be, for example, an amorphous carbon. Examples of the amorphous carbon may include carbon black (CB), acetylene black (AB), furnace black (FB), Ketjen black (KB), graphene, and/or the like; however, the carbonaceous anode active material is not necessarily limited to the aforementioned examples and may be any material categorized as amorphous carbon in the art. Amorphous carbon is carbon with no crystalline structure or an extremely or relatively low degree of crystallinity and as such, may be distinguished from crystalline carbon or graphitic carbon.

The carbonaceous anode active material may be porous carbon, for example. For example, pores included in the porous carbon may have a pore volume of about 0.1 cc/g to about 10.0 cc/g, about 0.5 cc/g to about 5 cc/g, or about 0.1 cc/g to about 1 cc/g. For example, pores included in the porous carbon may have an average pore diameter of about 1 nm to about 50 nm, about 1 nm to about 30 nm, or about 1 nm to about 10 nm. The BET specific surface of the porous carbon may be, for example, about 100 m²/g to about 3,000 m²/g.

The metal or metalloid anode active material may include at least one of (e.g., selected from among) gold (Au), platinum (Pt), palladium (Pd), silicon (Si), silver (Ag), aluminum (Al), bismuth (Bi), tin (Sn), and zinc (Zn), but is not necessarily limited to the aforementioned materials. The metal or metalloid anode active material may be any metal anode active material or metalloid anode active material available in the art that can form (or provide) an alloy or a compound with lithium. For example, nickel (Ni) does not form (or provide) an alloy with lithium and is therefore not regarded as a metal anode active material.

Among the above anode active materials, the first anode active material layer 22 may include a single anode active material, or may include a mixture of multiple different types (kinds) of anode active materials. For example, the first anode active material layer 22 may include amorphous carbon alone or may include one or more of (e.g., selected from among) gold (Au), platinum (Pt), palladium (Pd), silicon (Si), silver (Ag), aluminum (Al), bismuth (Bi), tin (Sn), and zinc (Zn). In some embodiments, the first anode active material layer 22 may include a mixture of amorphous carbon with at least one of (e.g., selected from among) gold (Au), platinum (Pt), palladium (Pd), silicon (Si), silver (Ag), aluminum (Al), bismuth (Bi), tin (Sn), and zinc (Zn). A mixing ratio of amorphous carbon to the metal(s) described herein, such as gold (Au) in such a mixture may be about 99:1 to about 1:99, about 10:1 to about 1:2, about 5:1 to about 1:1, or about 4:1 to about 2:1 in weight ratio, but without being necessarily limited thereto, may be selected according to required characteristics of the all solid secondary battery 1. As the anode active material has the above compositions, cycling performance of the all solid secondary battery 1 may further improve.

The anode active material included in the first anode active material layer 22 may include, for example, a mixture of first particles composed of amorphous carbon, and second particles composed of a metal or metalloid. Examples of the metal or metalloid may include gold (Au), platinum (Pt), palladium (Pd), silicon (Si), silver (Ag), aluminum (Al), bismuth (Bi), tin (Sn), zinc (Zn), and/or the like. In other embodiments, the metalloid may be a semiconductor. The content (e.g., amount) of the second particles may be about 1 wt% to about 99 wt%, about 1 wt% to about 60 wt%, about 8 wt% to about 60 wt%, about 10 wt% to about 50 wt%, about 15 wt% to about 40 wt%, or about 20 wt% to about 30 wt%, with respect to the total weight of the mixture. As the content (e.g., amount) of the second particles is within the above ranges, a cycling performance of the all solid secondary battery 1 may further improve.

In other embodiments, the first anode active material layer 22 may include a composite anode active material. For example, the composite anode active material may include a carbonaceous support and a metal-based anode active material supported on the carbonaceous support. With the composite anode active material having the above structure, uneven distribution of the metal-based anode active material within the first anode active material layer may be prevented or reduced, giving rise to a substantially uniform distribution. As a result, the cycling performance of the all solid secondary battery 1 including the first anode active material layer 22 may further improve.

Examples of the metal-based anode active material supported on the carbonaceous support may include a metal, a metal oxide, a metal-metal oxide composite, or a combination thereof. Examples of the metal may include gold (Au), platinum (Pt), palladium (Pd), silicon (Si), silver (Ag), aluminum (Al), bismuth (Bi), tin (Sn), tellurium (Te), zinc (Zn), and/or the like. Examples of the metal oxide may include AuₓO_{y} (0<x≤2 and 0<y≤3), PtₓO_{y} (0<x≤1 and 0<y≤2), PdₓO_{y} (0<x≤1 and 0<y≤1), SiₓO_{y} (0<x≤1 and 0<y≤2), AgₓO_{y} (0<x≤2 and 0<y≤1), AlₓO_{y} (0<x≤2 and 0<y≤3), BiₓO_{y} (0<x≤2 and 0<y≤3), SnₓO_{y} (0<x≤1 and 0<y≤2), TeₓO_{y} (0<x≤1 and 0<y≤3), ZnₓO_{y} (0<x≤1 and 0<y≤1), or a combination thereof. Examples of the metal-metal oxide composite may include a composite of Au and AuₓO_{y} (0<x≤2 and 0<y≤3), a composite of Pt and PtₓO_{y} (0<x≤1 and 0<y≤2), a composite of Pd and PdₓO_{y} (0<x≤1 and 0<y≤1), a composite of Si and SiₓO_{y} (0<x≤1 and 0<y≤2), a composite of Ag and AgₓO_{y} (0<x≤1 and 0<y≤2), a composite of Al and AlₓO_{y} (0<x≤2 and 0<y≤3), a composite of Bi and BiₓO_{y} (0<x≤2 and 0<y≤3), a composite of Sn and SnₓO_{y} (0<x≤1 and 0<y≤2), a composite of Te and TeₓO_{y} (0<x≤1 and 0<y≤3), a composite of Zn and ZnₓO_{y} (0<x≤1 and 0<y≤1), or a combination thereof.

The carbonaceous support may be, for example, an amorphous carbon. Examples of the amorphous carbon may include carbon black (CB), acetylene black (AB), furnace black (FB), Ketjen black (KB), graphene, activated carbon, carbon nanofibers (CNF), carbon nanotubes (CNT), and/or the like. However, the amorphous carbon is not necessarily limited to the aforementioned examples but may be any material classified as amorphous carbon in the art. Amorphous carbon is carbon with no crystalline structure or an extremely or relatively low degree of crystallinity and as such, may be distinguished from crystalline carbon or graphitic carbon. The carbonaceous material may be, for example, a carbonaceous anode active material.

The composite anode active material may have, for example, a particulate form (e.g., in a form of particles). The particle diameter of the composite anode active material having a particulate form (e.g., in a form of particles) may be, for example, from about 10 nm to about 4 µm, about 10 nm to about 1 µm, about 10 nm to about 500 nm, about 10 nm to about 200 nm, or about 10 nm to about 100 nm. With the composite anode active material having a particle diameter within the above ranges, reversible absorption and/or desorption of lithium during cycling may be further facilitated. The metal-based anode active material supported on the support may have, for example, a particulate form (e.g., in a form of particles). For example, the metal-based anode active material may have a particle diameter of from about 1 nm to about 200 nm, about 1 nm to about 150 nm, about 5 nm to about 100 nm, or about 10 nm to about 50 nm. The carbonaceous support may have, for example, a particulate form (e.g., in a form of particles). For example, the carbonaceous support may have a particle diameter of from about 10 nm to about 2 µm, about 10 nm to about 1 µm, about 10 nm to about 500 nm, about 10 nm to about 200 nm, or about 10 nm to about 100 nm. With the carbonaceous support having a particle diameter in the above ranges, a more substantially uniform distribution within the first anode active material layer may be achieved. For example, the carbonaceous support may be nanoparticles having a particle diameter of about 500 nm or less. The particle diameter of the composite anode active material, the particle diameter of the metal-based anode active material, and the particle diameter of the carbonaceous support may be, for example, an average particle diameter. The average particle diameter may be, for example, a median particle diameter (D50) as measured by a laser-type or kind particle size distribution analyzer. In some embodiments, the average particle diameter may be automatically determined utilizing a software, or manually determined utilizing a manual, from an electron microscope image.

### Anode: Binder

The binder included in the first anode active material layer 22 may be, for example, styrene butadiene rubber (SBR), polytetrafluoroethylene, polyvinylidene fluoride, polyethylene, a vinylidene fluoride/hexafluoropropylene copolymer, polyacrylonitrile, polymethylmethacrylate, and/or the like. However, the binder is not necessarily limited to the aforementioned examples and may be any material available as a binder in the art. The binder may be composed of a single type or kind of binder, or multiple binders of different types (kinds).

As the first anode active material layer 22 may include a binder, the first anode active material layer 22 may be stabilized on the anode current collector 21. Further, crack formation in the first anode active material layer 22 may be suppressed or reduced, despite volume changes and/or displacement of the first anode active material layer 22 during charging and discharging processes. For example, if (e.g., when) the first anode active material layer 22 does not contain any binder, the first anode active material layer 22 may be easily delaminated from the anode current collector 21. At an area where the anode current collector 21 is exposed as a result of delamination of the first anode active material layer 22 from the anode current collector 21, the anode current collector 21 may come in contact with the electrolyte layer 30, thus increasing the likelihood of a short circuit. For example, the first anode active material layer 22 may be prepared by applying and drying a slurry having dispersed therein materials forming (or providing) the first anode active material layer 22 on the anode current collector 21. By including a binder in the first anode active material layer 22, stable dispersion of the anode active materials within the slurry may be achieved. For example, if (e.g., when) applying the slurry onto the anode current collector 21 by a screen-printing method, it may be possible to prevent or reduce the screen from clogging (for example, clogging by agglomerates of the anode active material).

### Anode: Other Additives

The first anode active material layer 22 may further include other additives utilized in a suitable or comparable solid secondary battery, such as a filler, a coating agent, a dispersing agent, an ionically conductive aid, and/or the like.

### Anode: Solid Electrolyte

The first anode active material layer 22 may further include a solid electrolyte. The solid electrolyte may be, for example, a material of (e.g., selected from among) solid electrolytes included in the electrolyte layer 30. The solid electrolyte included in the first anode active material layer 22 may act as a reaction point where formation of lithium metal starts, may act as a space where the formed lithium metal is stored, or may act as a route for transferring lithium ions in the first anode active material layer 22. The solid electrolyte may not be provided.

For example, in the first anode active material layer 22, the concentration of the solid electrolyte may be high in a region adjacent to the electrolyte layer 30 and relatively low in a region adjacent to the anode current collector 21. For example, the solid electrolyte in the first anode active material layer 22 may have a concentration gradient in which the concentration gradually decreases from a region adjacent to the electrolyte layer 30 to a region adjacent to the anode current collector 21.

### Anode: First Anode Active Material Layer

The ratio (B/A) of initial charge capacity (B) of the first anode active material layer 22 to initial charge capacity (A) of the cathode active material layer may be about 0.005 to about 0.45. The initial charge capacity of the cathode active material layer 12 may be determined at a maximum charging voltage vs. Li/Li⁺ from a first open circuit voltage. The initial charge capacity of the first anode active material layer 22 may be determined at 0.01 V vs. Li/Li⁺ from a second open circuit voltage.

The maximum charging voltage may be determined by the type or kind of the cathode active material. The maximum charging voltage may be, for example, about 1.5 V, about 2.0 V, about 2.5 V, about 3.0 V, about 3.5 V, about 4.0 V, about 4.2 V, or about 4.3 V. For example, the maximum charging voltage of Li₂S or a Li₂S containing composite may be about 2.5 V vs. Li/Li⁺. For example, the maximum charging voltage of Li₂S or a Li₂S containing composite may be about 3.0 V vs. Li/Li⁺. The ratio (B/A) of initial charge capacity (B) of the first anode active material layer 22 to initial charge capacity (A) of the cathode active material layer may be, for example, about 0.01 to about 0.3, about 0.01 to about 0.2, or about 0.05 to about 0.1. The initial charge capacity (mAh) of the cathode active material layer 12 may be obtained by multiplying the charge specific capacity (mAh/g) of the cathode active material layer 12 by the mass (g) of a cathode active material in the cathode active material layer 12. If (e.g., when) multiple types (kinds) of cathode active materials are utilized, the product of charge specific density × mass may be calculated for each cathode active material, and the sum of these products may be defined as initial charge capacity of the cathode active material layer 12. The initial charge capacity of the first anode active material layer 22 may also be calculated in substantially the same manner. The initial charge capacity of the first anode active material layer 22 may be obtained by multiplying the charge specific density (mAh/g) of an anode active material by the mass of the anode active material in the first anode active material layer 22. If (e.g., when) multiple types (kinds) of anode active materials are utilized, the product of charge specific density X mass may be calculated for each anode active material, and the sum of these products may be defined as initial charge capacity of the first anode active material layer 22. The charge specific density of each of the cathode active material and the anode active material may be measured utilizing a solid half-cell utilizing lithium metal as a counter electrode. The initial charge capacity of each of the cathode active material layer 12 and the first anode active material layer 22 may be directly measured by utilizing a solid half-cell at a constant current density, for example, about 0.1 mA/cm². For the cathode, this measurement may be made for an operating voltage from a 1^{st} open circuit voltage (OCV) to a maximum charge voltage, for example, about 3.0 V (vs. Li/Li⁺). For the anode, this measurement may be made for an operating voltage from a second OCV to about 0.01 V with respect to the anode, for example, lithium metal. For example, the solid half-cell having the cathode active material layer may be charged with a constant current of about 0.1 mA/cm² to about 3.0 V from the 1^{st} OCV, and the solid half-cell having the first anode active material layer may be charged with a constant current of about 0.1 mA/cm² to about 0.01 V from the second OCV. For example, the current density during the constant current charging may be about 0.2 mA/cm² or about 0.5 mA/cm². The solid half-cell having the cathode active material layer may be charged, for example, to about 2.5 V, about 2.0 V, about 3.5 V, or about 4.0 V from the first OCV. The maximum charge voltage of the cathode active material layer may be determined according to the maximum voltage of a cell that satisfies the safety conditions described in JISC8712:2015 by Japanese Standards Association, the entire content of which is hereby incorporated by reference.

If (e.g., when) the initial charge capacity of the first anode active material layer 22 is excessively small, the thickness of the first anode active material layer 22 becomes extremely small, and as a result, lithium dendrites formed between the first anode active material layer 22 and the anode current collector 21 during repeated charging/discharging processes may cause collapse of the first anode active material layer 22, thus making it difficult to improve cycling performance of the all solid secondary battery 1. If (e.g., when) the charge capacity of the first anode active material layer 22 excessively increases, the energy density of the all solid secondary battery 1 may decrease, and the internal resistance of the all solid secondary battery 1 by the first anode active material layer 22 may increase, thus making it difficult to achieve improved cycling performance of the all solid secondary battery 1.

For example, the first anode active material layer 22 may have a thickness of about 50 % or less, about 40 % or less, about 30 % or less, about 20 % or less, about 10 % or less, or about 5 % or less, with respect to the thickness of the cathode active material layer 12. For example, the first anode active material layer 22 may have a thickness of about 1 % to about 50 %, about 1 % to about 40 %, about 1 % to about 30 %, about 1 % to about 20 %, about 1 % to about 10 %, or about 1 % to about 5 %, with respect to the thickness of the cathode active material layer 12. For example, the first anode active material layer 22 may have a thickness of about 1 µm to about 20 µm, about 2 µm to about 15 µm, or about 3 µm to about 10 µm. If (e.g., when) the first anode active material layer 22 is excessively thin, lithium dendrites formed between the first anode active material layer 22 and the anode current collector 21 may cause the first anode active material layer 22 to disintegrate, making it difficult to achieve improved cycling performance of the all solid secondary battery 1. If (e.g., when) the thickness of the first anode active material layer 22 excessively increases, the energy density of the all solid secondary battery 1 may decrease, and the internal resistance of the all solid secondary battery 1 by the first anode active material layer 22 may increase, thus making it difficult to achieve improved cycling performance of the all solid secondary battery 1. With decreasing thickness of the first anode active material layer 22, for example, the initial charge capacity of the first anode active material layer 22 may also decrease.

### Anode: Second Anode Active Material Layer

Referring to FIG. 3, the all solid secondary battery 1 may further include, for example, a second anode active material layer 24 that is arranged between the anode current collector 21 and the first anode active material layer 22 after charging. The second anode active material layer 24 may be a metal layer including lithium or a lithium alloy. The metal layer may include lithium or a lithium alloy. Therefore, the second anode active material layer 24, being a metal layer containing lithium, may serve as a lithium reservoir, for example. The lithium alloy may include, for example, a Li-Al alloy, a Li-Sn alloy, a Li-In alloy, a Li-Ag alloy, a Li-Au alloy, a Li-Zn alloy, a Li-Ge alloy, a Li-Si alloy, and/or the like, but without being limited thereto, may be any material available as a lithium alloy in the art. The second anode active material layer 24 may be composed of one of such alloys, or lithium, or may be composed of one or more suitable types (kinds) of alloys. The second anode active material layer 24 may be, for example, a plated layer. For example, the second anode active material layer 24 may be plated between the first anode active material layer 22 and the anode current collector 21 during a charging process of the all solid secondary battery 1.

The second anode active material layer 24 is not limited to any particular thickness, but may have a thickness of, for example, about 1 µm to about 500 µm, about 1 µm to about 200 µm, about 1 µm to about 150 µm, about 1 µm to about 100 µm, or about 1 µm to about 50 µm. If (e.g., when) the thickness of the second anode active material layer 24 is excessively small, the second anode active material layer 24 may fail to sufficiently function as a lithium reservoir. If (e.g., when) the thickness of the second anode active material layer 24 is excessively large, the mass and volume of the all solid secondary battery 1 may increase, and the cycling performance of the all solid secondary battery 1 may be more likely to deteriorate.

In other embodiments, in the all solid secondary battery 1, the second anode active material layer 24 may be arranged between the anode current collector 21 and the first anode active material layer 22 prior to assembly of the all solid secondary battery 1, for example. In a case in which the second anode active material layer 24 is positioned between the anode current collector 21 and the first anode active material layer 22 prior to assembly of the solid-state secondary battery 1, the second anode active material layer 24 is a metal layer containing lithium and thus acts as a lithium reservoir. For example, prior to assembly of the all solid secondary battery 1, a lithium foil may be positioned between the anode current collector 21 and the first anode active material layer 22.

In a case in which the second anode active material layer 24 is plated by charging after assembly of the all solid secondary battery 1, because the second anode active material layer 24 is not included at the time of assembly of the all solid secondary battery 1, energy density of the all solid secondary battery 1 may increase. If (e.g., when) charging the all solid secondary battery 1, the charging may be performed to exceed the charging capacity of the first anode active material layer 22. The first anode active material layer 22 may be then overcharged. At the beginning of the charging, lithium may be absorbed into the first anode active material layer 22. The anode active material included in the first anode active material layer 22 may form (or provide) an alloy or a compound with lithium ions moved from the cathode 10. If (e.g., when) the charging is performed exceeding the capacity of the first anode active material layer 22, lithium may be precipitated, for example, on the back surface of the first anode active material layer 22, for example, between the anode current collector 21 and the first anode active material layer 22, and the precipitated lithium then may form (or provide) a metal layer that corresponds to the second anode active material layer 24. The second anode active material layer 24 may be a metal layer mainly composed of lithium (i.e., metal lithium). This result may be attributed to the fact that the anode active material included in the first anode active material layer 22 includes a material that forms an alloy or compound with lithium. During discharge, lithium in metal layers, for example, in the first anode active material layer 22 and the second anode active material layer 24, may be ionized and migrate toward the cathode 10. Therefore, lithium may be utilized as an anode active material in the all solid secondary battery 1. In some embodiments, the first anode active material layer 22 covers the second anode active material layer 24, and as such, may function as a protective layer for the metal layer, for example, the second anode active material layer 24, while inhibiting precipitation and growth of lithium dendrites. Therefore, short circuiting and capacity fading in the all solid secondary battery 1 may be inhibited, and consequently, cycling performance of the all solid secondary battery 1 may improve. Further, if (e.g., when) the second anode active material layer 24 is arranged by charging after assembly of the all solid secondary battery 1, the anode layer 20, for example, the anode current collector 21, the first anode active material layer 22, and the area therebetween are a Li-free region free of Li while the all solid secondary battery 1 is in the initial state or a fully discharged state.

### Anode: Anode Current Collector

The anode current collector 21 may be formed of a material that does not react with lithium, for example, does not form (or provide) an alloy or a compound with lithium. Examples of the material forming (or providing) the anode current collector 21 may include copper (Cu), stainless steel, titanium (Ti), iron (Fe), cobalt (Co), nickel (Ni), and/or the like. However, the material forming (or providing) the anode current collector 21 is not necessarily limited to the aforementioned materials but may be any material available as an electrode current collector in the art. The anode current collector 21 may be formed of one type or kind of the aforementioned metals, an alloy of two or more types (kinds) metals thereof, or a covering material. The anode current collector 21 may be, for example, a plate type or kind or a foil type or kind.

Referring to FIG. 2, the all solid secondary battery 1 may further include a thin film 23 containing an element capable of forming (or providing) an alloy with lithium, on at least one side (e.g., one or both (e.g., opposite) sides) of the anode current collector 21. The thin film 23 may be positioned between the anode current collector 21 and the first anode active material layer 22. The thin film 23 may include, for example, an element capable of forming (or providing) an alloy with lithium. Examples of the element capable of forming (or providing) an alloy with lithium may include gold, silver, zinc, tin, indium, silicon, aluminum, bismuth, and/or the like, but without being limited thereto, any element available in the art that is capable of forming (or providing) an alloy with lithium may be utilized. The thin film 23 may be composed of one of the aforementioned metals or may be composed of an alloy of one or more suitable kinds of metals. As the thin film 23 is arranged on the anode current collector 21, the plated form (e.g., in a form of plates or platelets) of the second anode active material layer being plated between the thin film 23 and the first anode active material layer 22 may be further flattened, and cycling performance of the all solid secondary battery 1 may further improve.

For example, the thin film 23 may have a thickness of about 1 nm to about 800 nm, about 10 nm to about 700 nm, about 50 nm to about 600 nm, or about 100 nm to about 500 nm. If (e.g., when) the thickness of the thin film 23 is less than 1 nm, it may be difficult to achieve functions attributable to the thin film 23. If (e.g., when) the thickness of the thin film 23 is excessively large, it causes the thin film 23 to absorb lithium by itself, decreasing the amount of lithium precipitated at the anode. As a result, the energy density of solid battery may decrease, and cycling performance of the all solid secondary battery 1 may deteriorate. The thin film 23 may be positioned on the anode current collector 21 by a vacuum deposition method, a sputtering method, a plating method and/or the like, but is not limited to the aforementioned methods and may be any method available in the art that is capable of forming (or providing) the thin film 23.

In some embodiments, the anode current collector 21 may include a base film, and a metal layer arranged on one side or both (e.g., opposite) sides of the base film. For example, the base film may include a polymer. For example, the polymer may be a thermoplastic polymer. For example, the polymer may include polyethylene terephthalate (PET), polyethylene (PE), polypropylene (PP), polybutylene terephthalate (PBT), polyimide (PI), or a combination thereof. The polymer may be an insulating polymer. As the base film includes an insulating thermoplastic polymer, in the event of a short circuit, the base film is softened or liquefied, blocking the operation of the battery, to thereby prevent or reduce a rapid increase in electrical current. For example, the metal layer may include copper (Cu), stainless steel, titanium (Ti), iron (Fe), cobalt (Co), nickel (Ni), or an alloy thereof. The anode current collector 21 may further include a metal chip and/or a lead-tab. For detailed descriptions of the base film, the metal layer, the metal chip, and the lead-tab of the anode current collector 21, refer to the cathode current collector 11 described above. Because the anode current collector 21 has the above structure, the weight of the anode may be reduced, and as a result, energy density of the anode and the lithium battery may improve.

### Solid Electrolyte Layer

### Solid Electrolyte Layer: Electrolyte

Referring to FIGS. 1 to 5, the solid electrolyte layer 30 may be arranged between the cathode 10 and the anode 20. For example, the solid electrolyte layer 30 may further include a solid electrolyte, a gel electrolyte, or a combination thereof.

The solid electrolyte contained in the solid electrolyte layer may be a sulfide-based solid electrolyte.

The solid electrolyte additionally included in the solid electrolyte layer 30 may include, for example, an oxide-based solid electrolyte, a polymer solid electrolyte, or a combination thereof.

For example, the oxide-based all-solid electrolyte may be Li_{1+x+y}AlₓTi₂₋ₓSi_{y}P_{3-y}O₁₂(0<x<2 and 0≤y<3), BaTiO₃, Pb(Zr,Ti)O₃(PZT), Pb₁₋ₓLaₓZr_{1-y} Ti_{y}O₃(PLZT) (0≤x<1, 0≤y<1), PB(Mg₃Nb_{2/3})O₃-PbTiO₃(PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃ (0<x<2 and 0<y<3), LiₓAl_{y}Ti_{z}(PO₄)₃ (0<x<2, 0<y<1, and 0<z<3), Li_{1+x+y}(Al, Ga)ₓ(Ti, Ge)₂₋ₓSi_{y}P_{3-y}O₁₂ (0≤x≤1 and 0≤y≤1), LiₓLa_{y}TiO₃ (0<x<2 and 0<y<3), Li₂O, LiOH, Li₂CO₃, LiAlO₂, Li₂O-Al₂O₃-SiO₂-P₂O₅-TiO₂-GeO₂, Li₃₊ₓLa₃M₂O₁₂ (M = Te, Nb, or Zr, and 0≤x≤10), or a combination thereof. The oxide-based solid electrolyte is produced, for example, by a sintering method and/or the like.

For example, the oxide-based solid electrolyte may be a garnet-type or kind (e.g., garnet) solid electrolyte of (e.g., selected from among) Li₇La₃Zr₂O₁₂ (LLZO) and Li₃₊ₓLa₃Zr₂₋ₐMₐO₁₂ (M doped LLZO, M=Ga, W, Nb, Ta, or Al, and 0<a<2 and 0≤x≤10).

For example, the polymer solid electrolyte may include a mixture of a lithium salt and a polymer, or may include a polymer having an ion-conducting functional group. For example, the polymer solid electrolyte may be a polymer electrolyte that is in a solid state at about 25 °C and about 1 atm. For example, the polymer solid electrolyte may not contain liquid. The polymer solid electrolyte may include a polymer. For example, the polymer may be polyethylene oxide (PEO), polyvinylidene fluoride (PVDF), vinylidene fluoride-hexafluoropropylene (PVDF-HFP), a poly(styrene-b-ethylene oxide) block or reduce copolymer (PS-PEO), poly(styrene-butadiene), poly(styrene-isoprene-styrene), a poly(styrene-b-divinylbenzene) block or reduce copolymer, a poly(styrene-ethylene oxide-styrene) block or reduce copolymer, polystyrene sulfonate (PSS), polyvinyl fluoride (PVF), poly(methylmethacrylate) (PMMA), polyethylene glycol (PEG), polyacrylonitrile (PAN), polytetrafluoroethylene (PTFE), polyethylenedioxythiophene (PEDOT), polypyrrole (PPY), polyacrylonitrile (PAN), polyaniline, polyacetylene, Nafion, Aquivion, Flemion, Gore, Aciplex, Morgane ADP, sulfonated poly(ether ether ketone) (SPEEK), sulfonated poly(arylene ether ketone ketone sulfone (SPAEKKS), sulfonated poly(aryl ether ketone (SPAEK), poly[bis(benzimidazobenzisoquinolinones)] (SPBIBI), poly(styrene sulfonate) (PSS), and lithium 9,10-diphenylanthracene-2-sulfonate (DPASLi+), or a combination thereof. However, the polymer is not limited to the aforementioned examples and may be any material available in the art that is utilized in polymer electrolyte. The lithium salt may be any lithium salt available in the art. The lithium salt may be, for example, LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (x and y are each an integer of 1 to 20), LiCl, Lil, or a mixture thereof. For example, the polymer included in the polymer solid electrolyte may be a compound containing 10 or more repeating units, 20 or more repeating units, 50 or more repeating units, or 100 or more repeating units. For example, the polymer included in the polymer solid electrolyte may have a weight average molecular weight of about 1,000 Dalton or more, about 10,000 Dalton or more, about 100,000 Dalton or more, or about 1,000,000 Dalton or more.

For example, the gel electrolyte may be a polymer gel electrolyte. For example, the gel electrolyte may have a gel state while not containing a polymer.

For example, the polymer gel electrolyte may include a liquid electrolyte and a polymer, or an organic solvent and a polymer having an ion-conducting functional group. For example, the polymer gel electrolyte may be a polymer electrolyte that is in a gel state at about 25 °C and about 1 atm. For example, the polymer gel electrolyte may have a gel state without containing liquid. The liquid electrolyte utilized in the polymer gel electrolytes may be, for example, a mixture of an ionic liquid, a lithium salt, and an organic solvent; a mixture of a lithium salt and an organic solvent; a mixture of an ionic liquid and an organic solvent; or a mixture of a lithium salt, an ionic liquid, and an organic solvent. The polymer utilized in the polymer gel electrolyte may be of (e.g., selected from among) polymers utilized in solid polymer electrolytes. The organic solvent may be of (e.g., selected from among) organic solvents utilized in liquid electrolytes. The lithium salt may be of (e.g., selected from among) lithium salts utilized in polymer solid electrolytes. The ionic liquid may refer to a room-temperature molten salt or a salt that is in a liquid state at room temperature, which only includes (e.g., includes (e.g., consists of)) ions and has a melting point of room temperature or lower. For example, the ionic liquid may be at least one of (e.g., selected from among) compounds containing: a) at least one cation of (e.g., selected from among) ammonium, pyrrolidinium, pyridinium, pyrimidinium, imidazolium, piperidinium, pyrazolium, oxazolium, pyridazinium, phosphonium, sulfonium, triazolium, and a mixture thereof; and b) at least one anion of (e.g., selected from among) BF₄⁻, PF₆⁻, AsF₆⁻, SbF₆⁻, AlCl₄⁻, HSO₄⁻, ClO₄⁻, CH₃SO₃⁻, CF₃CO₂⁻, CI-, Br, I⁻, BF₄⁻, SO₄⁻, CF₃SO₃⁻, (FSO₂)₂N⁻, (C₂F₅SO₂)₂N⁻, (C₂F₅SO₂)(CF₃SO₂)N⁻, and (CF₃SO₂)₂N⁻. For example, the polymer solid electrolyte may form (or provide) a polymer gel electrolyte by impregnation in a liquid electrolyte in a secondary battery. The polymer gel electrolyte may further include inorganic particles. For example, the polymer included in the polymer gel electrolyte may be a compound containing 10 or more repeating units, 20 or more repeating units, 50 or more repeating units, or 100 or more repeating units. For example, the polymer included in the polymer gel electrolyte may have a weight average molecular weight of about 500 Dalton or more, about 1,000 Dalton or more, about 10,000 Dalton or more, about 100,000 Dalton or more, or about 1,000,000 Dalton or more.

### Preparation Method of Cathode

To prepare a cathode, a carbon coating layer may be first formed on a cathode current collector.

Subsequently, an interlayer containing an adhesive polymer may be further formed on an upper part of the carbon coating layer. The interlayer may improve the adhesion between a cathode active material layer and the carbon coating layer arranged on the cathode current collector.

Separately, the method may further include the following processes: providing a Li₂S-containing composite; providing a sulfide-based solid electrolyte; preparing a mixture by mixing the Li₂S-containing composite with the sulfide-based solid electrolyte; and preparing a cathode by applying the mixture onto the carbon coating layer, followed by drying.

As the Li₂S-containing composite, a composite of Li₂S and lithium salt, or a composite of Li₂S, lithium salt, and carbonaceous material may be provided.

The composite of Li₂S and lithium salt may be prepared, for example, by mechanically milling Li₂S and a lithium salt. The milling conditions are not limited, and may be any condition that can form (or provide) a composite of Li₂S and lithium salt. The composite of Li₂S and lithium salt may be prepared by introducing Li₂S particles and a lithium salt into a ball mill, followed by mixing at a rate of about 100 rpm to about 1,000 rpm for about 1 to about 20 hours. The mixing may be performed one or more times.

Examples of the lithium salt may include Lil, LiBr, LiCI, LiF, LiH, Li₂O, Li₂Se, Li₂Te, Li₃N, LisP, Li₃As, Li₃Sb, Li₃Al₂, LiBs, Li₃OCl, LiPF₆, LiBF₄, LiSbF₆, LiAsF₆, LiClO₄, LiAlO₂, LiAlCl₄, LiNOs, Li₂CO₃, LiBH₄, Li₂SO₄, Li₃BO₃, Li₃PO₄, Li₄NCl, Li₅NCl₂, Li₃BN₂, or a combination thereof.

The composite of Li₂S, a lithium salt, and a carbonaceous material may be prepared, for example, through the processes of: mechanically milling Li₂S and the lithium salt; and adding the carbonaceous material to the milled product, followed by milling.

A sulfide-based solid electrolyte may be provided. A mixture may be prepared by mixing the Li₂S-lithium salt composite with the sulfide-based solid electrolyte.

The mixing ratio of the Li₂S-containing composite and the sulfide-based solid electrolyte may be, for example, a weight ratio of about 50:50 to about 95:5, about 50:50 to about 90:10, about 50:50 to about 80:20, or about 50:50 to about 70:30.

The mixture may further include a processing solvent. Due to further containing a processing solvent, the mixture may take a slurry form. The solvent may be, for example, octyl acetate, but without being limited thereto, may be any solvent available in the art. In some embodiments, the mixture may be prepared by a dry method without containing any processing solvent.

The interlayer may be formed utilizing an interlayer-forming (or providing) composition that contains an adhesive polymer.

The method of forming (or providing) the interlayer, utilizing polydopamine as the adhesive polymer as an example, may be described as follows.

According to embodiments, a polydopamine layer forming (or providing) composition containing a dopamine, a solvent, and a buffer solution may be prepared.

The dopamine may transform to polydopamine through self-polymerization in a pH range of about 8 to about 8.8, for example, about 8.5.

The pH of the polydopamine layer forming (or providing) composition may be about 8.0 to about 8.8, for example, about 8.5.

The buffer solution may be a solution with a pH of about 8.0 to about 8.8, and examples of the buffer solution may include a buffer solution containing Tris-HCl and water (volume ratio of HCl and H₂O being about 3:1), tris borate ethylene diamine tetra-acetic acid (TBE), tris-buffered saline (TBS), and phosphate-buffered saline (PBS).

The solvent may be a substance that does not affect the pH of the composition, and for example, may utilize an alcohol-based compound. Examples of the alcohol-based compound may include ethanol, methanol, butanol, isopropanol, and/or the like. The content (e.g., amount) of the solvent may be, for example, in a range of about 100 parts by weight to about 3,000 parts by weight with respect to about 100 parts by weight of the dopamine.

The drying may be carried out, for example, in the range of about 20 °C to about 25 °C.

The coating may include a dipping method, a spray coating method, a bar coating method, die casting, comma coating, screen printing, and/or the like. In some embodiments, an interlayer may be formed on a separate substrate, and then adhered to a cathode by pressing or lamination. The coating according to embodiments refers to a spray coating method.

According to other embodiments, an adhesive polymer-containing composition may be prepared by dissolving a dopamine monomer, which is a polydopamine precursor, in an acid such as HCl. In the composition, a cathode current collector with the carbon coating layer arranged thereon may be immersed. Subsequently, the product coated with the composition may be washed and dried, and an interlayer may be arranged on a surface of the carbon coating layer.

According to other embodiments, a polydopamine coating layer composition, in which polydopamine is dispersed in a buffer solution of water, may be prepared. The composition may be applied onto the carbon coating layer of the cathode current collector with the carbon coating layer arranged thereon, and dried to form (or provide) a polydopamine coating layer, which is then arranged on the surface of the cathode current collector as an interlayer. The coating may include a dipping method, a spray coating method, a bar coating method, die casting, comma coating, screen printing, and/or the like.

The drying may be carried out at, for example, about 30 °C to about 90 °C, for example, about 80 °C.

The present disclosure present disclosure will be described in greater detail through the following examples and comparative examples. However, it will be understood that the examples are provided only to illustrate the present disclosure and not to be construed as limiting the scope of the present disclosure.

### Preparation of composite of Li₂S and lithium salt

### Preparation Example 1: Li₂S-LiI Composite

Li₂S and LiI were mixed in a weight ratio of about 30:20. The resulting mixture was mechanically milled utilizing a ball mill, to produce a Li₂S-LiI composite. The milling conditions were for about 10 hours at about 25 °C, and at about 600 rpm.

The size of the Li₂S-LiI composite was less than about 1 µm. The size of the Li₂S-LiI composite was calculated utilizing software from a scanning electron microscope image of Li₂S-LiI composite powder. The size of the Li₂S-LiI composite is D50 average particle diameter.

The Mohs hardness of Li₂S was about 0.6 and Mohs hardness of LiI was about 2.0. The Mohs hardness of the Li₂S-LiI composite was less than about 2.

### Preparation Example 2: Li₂S-LiBr composite

A Li₂S-LiBr composite was prepared in substantially the same manner as Preparation Example 1, except that LiBr was utilized instead of Lil.

### Preparation Example 3: Li₂S-LiCl Composite

A Li₂S-LiCl composite was prepared in substantially the same manner as Preparation Example 1, except that LiCI was utilized instead of Lil.

### Comparative Preparation Example 2: Simple Mixture of Li₂S and LiI

A mixture containing Li₂S and LiI in a weight ratio of about 30:20 was utilized as is.

### (Preparation of Li₂S-LiI-CNF cathode active material)

### Preparation Example 4: Li2S-Lil-CNF (50:30:20)

### Stage 1

Li₂S and LiI were mixed in a weight ratio of about 50:30. The resulting mixture was mechanically milled utilizing a ball mill, to produce a Li₂S-LiI composite. The milling conditions were for about 10 hours at about 25 °C, and at about 600 rpm. The milling energy applied to a sample during milling was about 28 G.

### Stage 2

The Li₂S-LiI composite and carbon nanofibers (CNF) were mixed in a weight ratio of about 80:20. A Li₂S-LiI-CNF composite was prepared by mechanically milling the mixture utilizing a ball mill. The milling conditions were for about 10 hours at about 25 °C, and at about 600 rpm. The milling energy applied to a sample during milling was about 28 G. The Li₂S-LiI-CNF composite was utilized as a composite cathode active material.

### Preparation Example 5: Li₂S-LiI-CNF, 2 stages, 8 hr, 600 rpm, 28 G

A Li₂S-LiI-CNF composite was prepared in substantially the same manner as Preparation Example 4, except that the milling time in Stage 1 and Stage 2 was changed to about 8 hours.

### Preparation Example 6: Li₂S-LiI-CNF, 2 stages, 6 hr, 600 rpm, 28 G

A Li₂S-LiI-CNF composite was prepared in substantially the same manner as Preparation Example 4, except that the milling time in Stage 1 and Stage 2 was changed to about 6 hours.

### Preparation Example 7: Li₂S-LiI-CNF, 2 stages, 4 hr, 600 rpm, 28 G

A Li₂S-LiI-CNF composite was prepared in substantially the same manner as Preparation Example 4, except that the milling time in Stage 1 and Stage 2 was changed to about 4 hours.

### Comparative Preparation Example 2: Simple Mixture of Li₂S, Lil, and CNF

A mixture containing Li₂S, Lil, and CNF in a weight ratio of about 50:30:20 was utilized as is.

### Comparative Preparation Example 3: Li₂S-LiI-CNF, 2 stages, 1 hr, 600 rpm, 28 G

A Li₂S-LiI-CNF composite was prepared in substantially the same manner as Preparation Example 4, except that the milling time in Stage 1 and Stage 2 was changed to about 1 hour.

### Comparative Preparation Example 4: Li₂S-LiI-CNF, 2 stages, 20 hr, 600 rpm, 28 G

A Li₂S-LiI-CNF composite was prepared in substantially the same manner as Preparation Example 4, except that the milling time in Stage 1 and Stage 2 was changed to about 20 hours.

### Comparative Preparation Example 1: Li₂S-LiI-CNF, 510 rpm, 10 hr, 2 stages, 20 G (KR 2017-0068448 (Tatsumisago) (Stage 1)

A first mixture was prepared by mixing Li₂S and LiI in a weight ratio of about 30:20. The first mixture was mechanically milled utilizing a ball mill, to produce a Li₂S-LiI composite.

The milling conditions were for about 10 hours at about 25 °C, and at about 510 rpm. The milling energy applied to a sample during milling was about 20 G.

### Stage 2

A second mixture was prepared by mixing a Li₂S-LiI composite and carbon nanofiber (CNF) in a weight ratio of about 50:10. The second mixture was mechanically milled utilizing a ball mill, to produce a Li₂S-LiI-CNF composite.

The milling conditions were for about 10 hours at about 25 °C, and at about 510 rpm. The milling energy applied to a sample during milling was about 20 G. The Li₂S-LiI-CNF composite was utilized as a composite cathode active material.

### Comparative Preparation Example 6: Li₂S-LiI-CNF, 10 hr, 2 stages, 10 G

A Li₂S-LiI-CNF composite was prepared in substantially the same manner as Preparation Example 4, except that the rotation rate in Stage 1 and Stage 2 was decreased such that the milling energy be changed to about 10 G.

### Comparative Preparation Example 7: Li₂S-LiI-CNF, 10 hr, 2 stages, 30 G

A Li₂S-LiI-CNF composite was prepared in substantially the same manner as Preparation Example 4, except that the rotation rate in Stage 1 and Stage 2 was increased such that the milling energy be changed to about 30 G.

### Comparative Preparation Example 8: Simple Mixture of Li₂S and CNF

Li₂S and carbon nanofiber (CNF) were mixed in a weight ratio of about 30:30. The resulting mixture was utilized as a cathode active material as is.

### Comparative Preparation Example 9: Li₂S-CNF, 600 rpm, 2 hr, 1 stage, 20 G

Li₂S and carbon nanofiber (CNF) were mixed in a weight ratio of about 30:30. The resulting mixture was mechanically milled utilizing a ball mill, to produce a Li₂S-LiI composite. The milling conditions were for about 2 hours at about 25 °C, at about 600 rpm. The milling energy applied to a sample during milling was about 20 G. The Li₂S-CNF composite was utilized as a composite cathode active material.

### Comparative Preparation Example 10: Li₂S-CNF, 600 rpm, 10 hr, 1 stage, 20 G

A Li₂S-CNF composite was prepared in substantially the same manner as Comparative Preparation Example 7, except that the milling time was changed to 10 hours.

### Comparative Preparation Example 11: Li₂S-CNF-LiI, 600 rpm, 10 hr, 2 stages, 20 G

### Stage 1

Li₂S and carbon nanofiber (CNF) were mixed in a weight ratio of about 30:10. The resulting mixture was mechanically milled utilizing a ball mill, to produce a Li₂S-CNF composite. The milling conditions were for about 10 hours at about 25 °C, and at about 600 rpm. The milling energy applied to a sample during milling was about 20 G.

### Stage 2

The Li₂S-CNF composite and LiI were mixed in a weight ratio of about 40:20. The resulting mixture was mechanically milled utilizing a ball mill, to produce a Li₂S-CNF-Lil composite. The milling conditions were for about 10 hours at about 25 °C, and at about 600 rpm. The milling energy applied to a sample during milling was about 20 G. The Li₂S-LiI-CNF composite was utilized as a composite cathode active material.

### Comparative Preparation Example 12: Li₂S-SE-CNF, 600 rpm, 10 hr, 2 stages, 20 G

### Stage 1

Li₂S and LisPSsCI solid electrolyte (SE) were mixed in a weight ratio of about 30:20. The resulting mixture was mechanically milled utilizing a ball mill, to produce a Li₂S-SE composite. The milling conditions were for about 10 hours at about 25 °C, and at about 600 rpm. The milling energy applied to a sample during milling was about 20 G.

### Stage 2

The Li₂S-SE composite and CNF were mixed in a weight ratio of about 50:10. A Li₂S-SE-CNF composite was prepared by mechanically milling the mixture utilizing a ball mill. The milling conditions were for about 10 hours at about 25 °C, and at about 600 rpm. The milling energy applied to a sample during milling was about 20 G. The Li₂S-SE-CNF composite was utilized as a composite cathode active material.

### Comparative Preparation Example 13: Li₂S-LiI-CNF, 600 rpm, 2 hr, 1 stage, 20 G

Li₂S, Lil, and carbon nanofiber (CNF) were mixed in a weight ratio of about 30:20:10. A Li₂S-LiI-CNF composite was prepared by mechanically milling the mixture utilizing a ball mill. The milling conditions were for about 2 hours at about 25 °C, and at about 600 rpm. The milling energy applied to a sample during milling was about 20 G. The Li₂S-LiI-CNF composite was utilized as a composite cathode active material.

### Preparation of Cathode

### Example 1: Dry cathode containing Al current collector/Carbon/Li₂S-LiI-C

In a N-methyl-2-pyrrolidone solution containing about 10 wt% of a polyvinylidene fluoride binder dissolved therein, multi-walled carbon nanotubes were dispersed to prepare a carbon coating layer composition. The content (e.g., amount) of the multi-walled carbon nanotubes in the carbon coating layer composition was about 10 parts by weight, the content (e.g., amount) of NMP (e.g., N-Methylpyrrolidone or 1-methyl-2-pyrrolidinone) was about 80 parts by weight, and the content (e.g., amount) of the binder was about 10 parts by weight based on about 100 parts by weight of total weight of the carbon coating layer composition. The carbon coating layer composition was applied on the surface of an about 17 µm-thick aluminum foil current collector, which is a cathode current collector, and then dried at about 120 °C for about 4 hours, to form (or provide) a carbon coating layer having a thickness of about 100 nm on the cathode current collector.

As a cathode active material, the Li₂S-LiI-CNF composite prepared in Example 4 was prepared. As a solid electrolyte, argyrodite-type or kind (e.g., argyrodite) Li₆PS₅Cl crystals (D50=3.0 µm, crystalline) were prepared. PTFE was prepared as a binder.

The Li₂S-LiI-CNF composite and the solid electrolyte were placed in a mixer and mixed for about 2 minutes. The mixed product was combined with polytetrafluoroethylene (PTFE) and mixed for about 20 seconds by a mixer, and the cathode mixture powder thus obtained was kneaded and then milled by a roller to be thinly spread to a thickness of about 100 µm to about 150 µm, to thereby prepare a cathode. Mixing the composite and the solid electrolyte first, and then adding and mixing with PTFE, may ensure more successful mixing of the composite and the solid electrolyte.

A cathode mixture was prepared by mixing the composite cathode active material: solid electrolyte : binder at a weight ratio of about 60 : 39 : 1.0. The cathode mixture was obtained by dry mixing, utilizing a ball mill.

The cathode mixture was placed on an aluminum foil with a carbon coating layer arranged thereon, and was plate-pressed for about 10 minutes with a pressure of about 200 MPa to prepare a cathode. The thickness of the cathode was about 120 µm. The thickness of the cathode active material layer was about 100 µm, and the thickness of the carbon-coated aluminum foil was about 20 µm. The cathode active material layer and the cathode current collector had the same area.

### Example 2: Dry cathode containing Al current

### collector/Carbon/polydopamine/Li₂S-LiI-C

A cathode was prepared in substantially the same manner as Example 1, except that an interlayer on an upper part of the carbon coating layer of Example 1 was formed as follows, and a cathode active material layer was formed utilizing a cathode mixture on an upper part of the interlayer.

A polydopamine layer-forming (or providing) composition was prepared by mixing dopamine and a buffer solution of pH of about 8.5, and the amount of the buffer solution of pH of about 8.5 was about 50 mL per 0.1 g of dopamine. The mixture was diluted utilizing ethanol, to improve viscosity and drying properties without affecting the pH of the polydopamine layer-forming (or providing) composition during the process. The polydopamine layer-forming (or providing) composition was spray-coated onto an upper part of the surface of the carbon coating layer through a nozzle, followed by drying at about 25 °C to form (or provide) a polydopamine layer, which is an interlayer, to a thickness of about 10 nm on top of the carbon coating layer.

### Example 3: Dry cathode containing Al current

### collector/Carbon/polydopamine/Li₂S-LiI-C

A cathode was prepared following the same process as Example 1, except that the weight ratio of composite cathode active material: solid electrolyte : binder during the cathode mixture preparation was changed to about 70 : 29 : 1.0.

### Example 4: Dry cathode containing Al current

### collector/Carbon/polydopamine/Li₂S-LiI-C

A cathode was prepared following the same process as Example 2, except that the weight ratio of composite cathode active material: solid electrolyte : binder during the cathode mixture preparation was changed to about 70 : 29 : 1.0.

### Example 5: Dry cathode containing Al current collector/Carbon/Li-PAA/Li₂S-LiI-C composite

A cathode was prepared in substantially the same manner as in Example 1, except that a lithium polyacrylate (Li-PAA) was utilized instead of the polydopamine in forming (or providing) the interlayer.

### Comparative Example 1: Dry cathode containing Al current collector/Li₂S-LiI-C composite

A cathode was prepared in substantially the same manner as in Example 1, except that an aluminum foil was utilized instead of the aluminum foil with the carbon coating layer arranged thereon.

### Comparative Example 2: Dry cathode containing Al current collector/simple mixture of Li₂S, Lil, and CNF

A cathode was prepared in substantially the same manner as in Example 1, except that the simple mixture of Li₂S, Lil, and CNF prepared in Comparative Preparation Example 2 was utilized instead of the Li₂S-LiI-C composite prepared in Preparation Example 4.

### Comparative Example 3: Cathode containing Al current collector/polydopamine layer/carbon coating layer/Li₂S-LiI-C

A cathode was prepared in substantially the same manner as Example 1, except that the interlayer and the carbon coating layer were stacked in a reverse order as compared to Example 2.

In the cathode prepared according to Comparative Example 3, due to the polydopamine layer being located between the current collector and the carbon coating layer, it was difficult to suppress or reduce side reactions between the carbon coating layer and the sulfide-based solid electrolyte of the cathode active material layer.

### Reference Example 1: Cathode current collector/polydopamine layer/cathode active material layer/SE/Ag/C anode layer

A cathode was prepared in substantially the same manner as Example 1, except that an interlayer on an upper part of an aluminum foil was formed as follows and a cathode active material layer was formed utilizing a cathode mixture on an upper part of the interlayer.

A polydopamine layer-forming (or providing) composition was prepared by mixing dopamine and a buffer solution of pH of about 8.5, and the amount of the buffer solution of pH of about 8.5 was about 50 mL per 0.1 g of dopamine. The mixture was diluted utilizing ethanol, to improve viscosity and drying properties without affecting the pH of the polydopamine layer-forming (or providing) composition during the process. The polydopamine layer-forming (or providing) composition was spray-coated on top of the surface of an aluminum foil, and the resulting product was dried at about 25 °C to form (or provide) a polydopamine layer to a thickness of about 10 nm, to thereby form (or provide) a structure in which a cathode current collector/polydopamine layer/cathode active material layer are stacked.

### Preparation of Solid Secondary Battery

### Example 6: Dry cathode containing Al current collector/Carbon/Li₂S-LiI-C//Sulfide-based solid electrolyte (SE)//Ag-C coated SUS

### Preparation of Cathode

### The cathode of Example 1 was utilized.

### Preparation of Anode

For an anode current collector, an about 10 µm-thick SUS sheet was prepared. For anode active materials, carbon black (CB) having a primary particle diameter of about 30 nm and silver (Ag) particles having an average particle diameter of about 60 nm were prepared.

In a vessel containing 4 grams of mixed powder containing CB and Ag particles in a weight ratio of about 3:1, 4 grams of an NMP solution containing about 7 wt% of PVDF binder (#9300, KUREHA) were added to prepare a mixed solution. The prepared mixed solution was stirred while slowly adding NMP to this mixed solution, to produce a slurry. The prepared slurry was applied to the SUS sheet by a bar coater, and dried in open air at about 80 °C for about 10 minutes, and then vacuum-dried at about 40 °C for about 10 hours to prepare a laminate. The prepared laminate was cold roll-pressed to flatten the surface thereof, to prepare an anode having the first anode active material layer/anode current collector structure. The thickness of the anode active material layer was about 15 µm. The first anode active material layer and the anode current collector had the same surface area.

### Preparation of Solid Electrolyte Layer

As a solid electrolyte, argyrodite-type or kind (e.g., argyrodite) crystal LisPSsCI solid electrolyte (D₅₀=3.0 µm, crystalline) was utilized, and about 1.5 parts by weight of an acryl-based binder was added to about 98.5 parts by weight of the solid electrolyte to prepare a mixture. The prepared mixture was stirred while adding octyl acetate thereto, to prepare a slurry. The prepared slurry was applied onto an about 15-µm thick nonwoven fabric placed on an about 75 µm-thick PET substrate by utilizing a bar coater, and dried in open air at a temperature of about 80 °C for about 10 minutes to prepare a laminate. The prepared laminate was vacuum-dried at a temperature of about 80 °C for about 2 hours to prepare a solid electrolyte layer.

### Inactive Member

A slurry obtained by mixing cellulose fibers, glass fibers, aluminum hydroxide (Al(OH)₃), an acryl-based binder, and a solvent was molded in the form (or provide) of a gasket, and then the solvent was removed therefrom to produce a flame-retardant inactive member.

The weight ratio of pulp fibers (cellulose fibers) : glass fibers : aluminum hydroxide (Al(OH)₃): acryl-based binder was about 20 : 8 : 70 : 2. The thickness of the inactive member was about 120 µm.

Before placing the produced flame-retardant inactive member on the solid electrolyte layer, the flame-retardant inactive member was thermally treated under vacuum at about 80 °C for about 5 hours to remove moisture and/or the like therefrom.

### Preparation of Solid Secondary Battery

As shown in FIG. 4, the solid electrolyte layer was arranged on the anode layer such that the first anode active material layer is in contact with the solid electrolyte layer, and the cathode was arranged on the solid electrolyte layer. A gasket may be arranged around the cathode while being around (e.g., surrounding) the cathode to thereby prepare a laminate. The thickness of the gasket was about 120 µm. The flame-retardant inactive member was utilized as the gasket. The gasket was arranged so as to be in contact with a side surface of the cathode, and the sel. The cathode was arranged in the center portion of the solid electrolyte layer, and the gasket was placed extending to a terminal portion of the solid electrolyte layer, while being around (e.g., surrounding) the cathode. The surface area of the cathode was about 90 % of the surface area of the solid electrolyte layer, and the gasket was arranged in the entire remaining about 10 % of the surface area of the solid electrolyte layer that does not have the cathode arranged therein.

The prepared laminate was plate-pressed with a pressure of about 500 MPa at about 85 °C for about 30 minutes. Such a press treatment may sinter the solid electrolyte layer and improve battery performance. The thickness of the sintered solid electrolyte layer was about 45 µm. The density of the argyrodite-type or kind (e.g., argyrodite) crystal LisPSsCI solid electrolyte included in the sintered solid electrolyte layer was about 1.6 g/cc. The surface area of the solid electrolyte layer was the same as the surface area of the anode.

The pressed laminate was placed in a pouch and vacuum-sealed to produce an all solid secondary battery. A part of the cathode current collector and the anode current collector was extended out of the sealed battery and utilized as a cathode terminal and an anode terminal, respectively.

### Examples 7 to 10

Solid secondary batteries were prepared in substantially the same manner as Example 6, except that cathodes prepared in Examples 2 to 5 were respectively utilized.

### Comparative Examples 4 to 6:

Solid secondary batteries were prepared in substantially the same manner as Example 6, except that cathodes prepared in Comparative Examples 1 to 3 were respectively utilized.

### Reference Example 2

An all solid secondary battery was prepared in substantially the same manner as Example 6, except that cathode prepared in Reference Example 1 was utilized.

### Evaluation Example 1: XRD and Scanning Electron Microscopy Analysis

XRD spectra were measured utilizing Cu Kα radiation for the bare Li₂S utilized in Preparation Example 1, the pulverized Li₂S, and the Li₂S-LiI-C composite prepared in Preparation Example 4. The measurement results are shown in Table 1.

From the XRD spectra, a Li₂S crystallite size and lattice constant were derived form (or provide) a first peak for (111) crystal plane shown at a diffraction angle of 2θ= about 27° ± 2.0°.

The pulverized Li₂S was prepared by milling in substantially the same milling conditions except that the mixture containing Li₂S, LiI and CNF in a weight ratio of about 50 : 30 : 20 utilized in Preparation Example 4 was changed to about 100 parts by weight of Li₂S.

The bare Li₂S utilized in Preparation Example 1, the pulverized Li₂S, and the Li₂S-LiI-CNF composite prepared in Preparation Example 4 were measured for the particle size of the composite (e.g., D50 particle diameter) utilizing a particle size analyzer (PSA) utilizing a laser. The results of the measurement are shown in Table 1.

**Table 1**

| | Li₂S crystallite size [nm] | Li₂S particle size [µm] |
|---|---|---|
| bare Li₂S | 65 | 8 |
| Pulverized Li₂S | 15 | - |
| Li₂S-LiI-C composite | Less than 10 | Less than 1 |

As shown in Table 1, the Li₂S-LiI-CNF composite shows a significant decrease of particle size and crystallite size, relative to Li₂S. The Li₂S-LiI-CNF composite included a Li₂S-LiI solid solution, the size of Li₂S crystallites was less than about 9.9 nm, and the Li₂S particle size of the composite was about 2 µm or less.

Although not shown in Table 1, the Li₂S-LiI-CNF composite of Preparation Example 1 had a larger lattice constant than the lattice constant of the bare Li₂S. It was considered that the increase in the lattice constant of the Li₂S-LiI-CNF composite over the lattice constant of the bare Li₂S is due to the dissolution of LiI in Li₂S crystals. Therefore, it was confirmed that the Li₂S-LiI-CNF composite forms a solid solution.

Although not shown in Table 1, the particle size of the Li₂S-LiI-CNF composite of Preparation Example 1 was about 5 µm.

### Evaluation Example 2: XRD and Scanning Electron Microscopy Analysis

XRD spectra were measured utilizing Cu Kα radiation for the composite cathode active materials (i.e., composites) prepared in Preparation Examples 4 to 7 and Comparative Preparation Examples 3 to 13. From the measured XRD spectra, Li₂S crystallite sizes calculated from the first peaks appearing at a diffraction angle 2θ = about 27° ± 2.0°, corresponding to the (111) plane, are shown in Table 1. The crystallite size was measured utilizing Sherrer Equation.

The composite cathode active materials prepared in Preparation Examples 4 to 7 and Comparative Preparation Examples 3 to 13 were measured for Li₂S particle diameter, utilizing a scanning electron microscope. The Li₂S particle diameter of the composite cathode active material may be an arithmetic mean value of particle diameters of a plurality of Li₂S particles measured utilizing software from a scanning electron microscope image. The results of measurement are shown in Table 2.

**Table 2**

| Item | Milling in Stage 1 | Milling in Stage 2 | Solid solution formation | Li₂S crystallite size [nm] | Li₂S particle size [µm] |
|---|---|---|---|---|---|
| Preparation Example 4 (28 G, 10 hr) (Li₂S-LiI-CNF composite) | 600 rpm, 28 G, 10 hr | 600 rpm, 28 G, 10 hr | ○ | 9.8 | Less than 1 |
| Preparation Example 5 (28 G, 8 hr) (Li₂S-LiI-CNF composite) | 600 rpm, 28 G, 8 hr | 600 rpm, 28 G, 8 hr | ○ | 7.2 | Less than 1 |
| Preparation Example 6 (28 G, 6 hr) (Li₂S-LiI-CNF composite) | 600 rpm, 28 G, 6 hr | 600 rpm, 28 G, 6 hr | ○ | 8.2 | Less than 1 |
| Preparation Example 7 (28 G, 4 hr) (Li₂S-LiI-CNF composite) | 600 rpm, 28 G, 4 hr | 600 rpm, 28 G, 4 hr | ○ | 9.5 | Less than 1 |
| Comparative Preparation Example 3 (28 G, 1 hr) (Li₂S-LiI-CNF composite) | 600 rpm, 28 G, 1 hr | 600 rpm, 28 G, 1 hr | ○ | 20.1 | Less than 1 |
| Comparative Preparation Example 4 (28 G, 20 hr) (Li₂S-LiI-CNF composite) | 600 rpm, 28 G, 20 hr | 600 rpm, 28 G, 20 hr | Δ | 11.8 | Less than 1 |
| Comparative Preparation Example 5 (Li₂S-LiI-CNF composite) | 510 rpm, 20 G, 10 hr | 510 rpm, 20 G, 10 hr | ○ | 9.9 | Less than 1 |
| Comparative Preparation Example 6 (7 G, 10 hr) (Li₂S-LiI-CNF composite) | 300 rpm, 7 G, 10 hr | 300 rpm, 7 G, 10 hr | × | 27.2 | 3 |
| Comparative Preparation Example 7 (38 G, 10 hr) (Li₂S-LiI-CNF composite) | 700 rpm, 38 G, 10 hr | 700 rpm, 38 G, 10 hr | Δ | 15.6 | 2 |
| Comparative Preparation Example 8 (0 G) (Li₂S + CNF simple mixing) | - | - | × | 66.67 | 8 |
| Comparative Preparation Example 9 (28 G, 1 hr) (Li₂S-CNF composite) | 600 rpm, 20 G, 2 hr | - | × | 24.07 | 3 |
| Comparative Preparation Example 10 (28 G, 10 hr) (Li₂S-CNF composite) | 600 rpm, 20 G, 10 hr | - | × | 9.89 | Less than 1 |
| Comparative Preparation Example 11 (28 G, 10 hr) (Li₂S-CNF-Lil composite) | 600 rpm, 28 G, 10 hr | 600 rpm, 28 G, 10 hr | × | 15.2 | 2 |
| Comparative Preparation Example 12 (28 G, 10 hr) (Li₂S-SE-CNF composite) | 600 rpm, 28 G, 10 hr | 600 rpm, 28 G, 10 hr | × | 8.9 | Less than 1 |
| Comparative Preparation Example 13 (28 G, 2 hr) (Li₂S-Lil-CNF composite) | 600 rpm, 20 G, 2 hr | - | ○ | 22 | 3 |

As shown in Table 2, the Li₂S-LiI-CNF composites of Examples 4 to 7 each contain a Li₂S-LiI solid solution, the size of Li₂S crystallites was less than about 9.9 nm, and the Li₂S particle size of the composite was about 2 µm or less.

In the Li₂S-LiI-CNF composite of Comparative Preparation Example 3, the size of Li₂S crystallites was about 9.9 nm or more due to a decrease of the milling energy during the preparation.

In the Li₂S-LiI-CNF composite of Comparative Preparation Example 4, due to increase of the milling energy during the preparation, LiI formed a separate phase through phase-separation and failed to form (or provide) a solid solution, and the size of Li₂S crystallites also increased.

The Li₂S-LiI-CNF composite of Comparative Preparation Example 6 failed to form (or provide) a Li₂S-LiI solid solution due to an excessively decreased milling energy during preparation.

The Li₂S-LiI-CNF composite of Comparative Preparation Example 7 failed to properly form (or provide) a Li₂S-LiI solid solution due to being heated by an increased milling energy during preparation.

Because the Li₂S-LiI-CNF composite of Comparative Preparation Example 13 is prepared in Stage 1, the composite contained a Li₂S-LiI solid solution, but showed increased Li₂S crystallite size, and the Li₂S particle size of the composite exceeded about 2 µm.

The simple mixture of Li₂S and CNF in Comparative Preparation Example 8 and the composites in Comparative Preparation Examples 9, 10, and 12 failed to form (or provide) a solid solution.

The Li₂S-CNF-LiI composite of Comparative Example 11 failed to form (or provide) a Li₂S-LiI solid solution properly as the Li₂S-CNF-LiI composite was prepared in Stage 2 after preparing the Li₂S-CNF composite in Stage 1.

### Evaluation Example 3: Charge/Discharge Test

The solid secondary batteries prepared in Examples 6 to 10, Comparative Examples 4 and 6, and Reference Example 2 were each evaluated for their charge-discharge characteristics by the following charge-discharge test.

The charge-discharge test was performed while the all solid secondary battery was placed in a constant-temperature bath at about 45 °C.

In the first cycle, each battery was charged at a constant current of about 0.05 C for about 20 hours until the battery voltage reached a voltage of about 2.8 V. Then, the battery was discharged at a constant current of about 0.05 C for about 20 hours until the battery voltage reached about 1.0 V.

The charge-discharge test was performed while the all solid secondary battery was placed in a constant-temperature bath at about 45 °C.

The second cycle was performed by charging and discharging under the same conditions as the first cycle.

The discharge capacity in the second cycle was utilized as a standard capacity.

In the third cycle, each battery was charged at a constant current of about 0.1 C for about 10 hours until the battery voltage reached a voltage of about 2.8 V. Then, the battery was discharged at a constant current of about 0.1 C for about 10 hours until the battery voltage reached about 1.0 V. Subsequently, charging and discharging were performed up to 23 cycles under the same conditions as the third cycle. The results of measurement are shown in Table 3.

Initial efficiency is expressed by Equation 1, and capacity retention is expressed by Equation 2. Initial Efficiency [%] = [Discharge Capacity in 1st Cycle / Charge Capacity in 1st Cycle] × 100 Capacity Retention [%] = [Discharge Capacity in 23rd Cycle / Discharge Capacity in 3rd Cycle] × 100

**Table 3**

| Item | 0.05C discharg e capacity (mAh) | Initial efficiency (%) | Capacity retention [%] (20 times) |
|---|---|---|---|
| Example 6 (Dry cathode containing Al current collector/Carbon/Li₂S-Lil-C) (Composite cathode active material: solid electrolyte: binder = weight ratio of 60 : 39 : 1.0) | 961 | 75.8 | 86.5 |
| Example 7 (Dry cathode containing Al current collector/Carbon/polydopamine layer/Li₂S-LiI-C) (Composite cathode active material: solid electrolyte: binder = weight ratio of 60 : 39 : 1.0) | 972 | 82.6 | 88.9 |
| Example 8 (Dry cathode containing Al current collector/Carbon/Li₂S-Lil-C) (Composite cathode active material: solid electrolyte: binder = weight ratio of 70 : 29 : 1.0) | 968 | 79.2 | 85.2 |
| Example 9 (Dry cathode containing Al current collector/Carbon/polydopamine layer/Li₂S-LiI-C) (Composite cathode active material: solid electrolyte: binder = weight ratio of 70 : 29 : 1.0) | 977 | 84.8 | 87.7 |
| Example 10 (Dry cathode containing Al current collector/Carbon/Li-PAA/Li₂S-Lil-C composite) | 979 | 82.2 | 89.1 |
| Comparative Example 4 (Dry cathode containing Al current collector/Li₂S-LiI-C composite) | 709 | 72.6 | 59.1 |
| Comparative Example 5 (Dry cathode containing Al current collector/simple mixture of Li₂S, Lil, and CNF) | 322 | 56.4 | 79.2 |
| Comparative Example 6 (Cathode containing Al current collector/polydopamine layer/carbon coating layer/Li₂S-LiI-C) | 868 | 80.2 | 81.2 |
| Reference Example 2 (Cathode current collector/polydopamine layer/cathode active material layer) | 576 | 73.2 | 70.2 |

As shown in Table 3, the solid secondary batteries of Examples 6 to 10, employing the cathodes of Examples 1 to 5, showed improved lifespan characteristics compared to the solid secondary batteries of Comparative Examples 4 to 6 employing the cathodes of Comparative Examples 1 to 3 and the all solid secondary battery of Reference Example 2. In the solid secondary batteries of Examples 7 to 9 having an interlayer containing polydopamine, and the all solid secondary battery of Example 10 having an interlayer containing lithium polyacrylate, discharge capacity improved due to improved adhesion between the cathode current collector and the cathode active material layer, and even if (e.g., when) charging and discharging are repeated during a cycle, the contact between the cathode current collector and the cathode active material layer remained stable without separation of the cathode active materials, leading to an improvement in capacity retention.

In some embodiments, it was found that in the solid secondary batteries of Examples 6 to 10, a lithium metal layer, which is the second anode active material layer, was formed between the first anode active material layer and the anode current collector after initial charging. This result was confirmed through cross-sectional SEM images of the solid secondary batteries. Further, it was confirmed that the Li₂S-LiI-CNF composite was arranged in voids between a plurality of sulfide-based solid electrolyte particles, from a cross-sectional scanning electron microscopic image of the solid electrolyte layer.

### Evaluation Example 4: Evaluation of Rate Capability

The solid secondary batteries of Examples 6 to 10 and Comparative Examples 4 to 6, employing the cathodes prepared in Examples 1 to 5 and Comparative Examples 1 to 3, respectively, were evaluated for rate capacity by the following charge-discharge test. The charge-discharge test was performed while the all solid secondary battery was placed in a constant-temperature bath at about 45 °C.

The lithium batteries prepared in Examples 6 to 10 and Comparative Examples 4 to 6 were charged at a constant current of about 0.05 C rate at about 45 °C until the battery voltage reached about 2.8 V (vs. Li). Subsequently, each battery was discharged at a constant current of about 0.05 C rate until the battery voltage reached about 1.0 V (vs. Li) during discharge (formation cycle).

The lithium battery after the formation cycle was charged at about 45 °C at a constant current of about 0.05 C rate until the battery voltage reached about 2.8 V (vs. Li). Subsequently, the battery was discharged at a constant current of about 0.05 C rate until the battery voltage reached about 1.0 V (vs. Li) during discharge (1st cycle).

The lithium battery after the 1st cycle was charged at about 45 °C at a constant current of about 0.05 C rate until the battery voltage reached about 2.8 V (vs. Li). Subsequently, the battery was discharged at a constant current of about 0.05 C rate until the battery voltage reached about 1.0 V (vs. Li) during discharge (2nd cycle).

The lithium battery after the 2nd cycle was charged at about 45 °C at a constant current of about 0.1 C rate until the battery voltage reached about 2.8 V (vs. Li). Subsequently, the battery was discharged at a constant current of about 0.1 C rate until the battery voltage reached about 1.0 V (vs. Li) during discharge (3rd cycle).

The lithium battery after the 3rd cycle was charged at about 45 °C at a constant current of about 0.1 C rate until the battery voltage reached about 2.8 V (vs. Li). Subsequently, the battery was discharged at a constant current of about 0.1 C rate until the battery voltage reached about 1.0 V (vs. Li) during discharge (4^{th} cycle).

Throughout the charge-discharge cycles above, a rest period of about 10 minutes was provided after each charge/discharge cycle. A part of the room-temperature charge-discharge test results is shown in Table 4. Rate capability is defined as Equation 3. Rate Capability [%] = [Discharge Capacity in the 4th Cycle / Discharge Capacity in the 1st Cycle] × 100

**Table 4**

| Item | Rate capability (0.1 C/0.05 C) (%) |
|---|---|
| Example 6 (Dry cathode containing Al current collector/Carbon/Li₂S-Lil-C) (Composite cathode active material: solid electrolyte : binder = weight ratio of 60 : 39 : 1.0) | 98.2 |
| Example 7 (Dry cathode containing Al current collector/Carbon/polydopamine layer/Li₂S-LiI-C) (Composite cathode active material: solid electrolyte: binder = weight ratio of 60 : 39 : 1.0) | 97.8 |
| Example 8 (Dry cathode containing Al current collector/Carbon/Li₂S-Lil-C) (Composite cathode active material: solid electrolyte : binder = weight ratio of 70 : 29 : 1.0) | 96.8 |
| Example 9 (Dry cathode containing Al current collector/Carbon/polydopamine layer/Li₂S-LiI-C) (Composite cathode active material: solid electrolyte: binder = weight ratio of 70 : 29 : 1.0) | 96.2 |
| Example 10 (Dry cathode containing Al current collector/Carbon/Li-PAA/Li₂S-LiI-C composite) | 97.6 |
| Comparative Example 4 (Dry cathode containing Al current collector/Li₂S-LiI-C composite) | 80.5 |
| Comparative Example 5 (Dry cathode containing Al current collector/simple mixture of Li₂S, Lil, and CNF) | 56.3 |
| Comparative Example 6 (Cathode containing Al current collector/polydopamine layer/carbon coating layer/Li₂S-LiI-C) | 93.2 |
| Reference example 2 (Cathode current collector/polydopamine layer/cathode active material layer) | 84.2 |

As shown in Table 4, it was found that the solid secondary batteries of Examples 6 to 10 have improved rate capability compared to the solid secondary batteries of Comparative Examples 4 to 6 and Reference Example 2.

According to one aspect, an all solid secondary battery can be provided which has improved cycling performance by suppressing side reactions of a sulfide-based solid electrolyte, preventing or reducing deterioration, and reducing interfacial electric resistance.

In present disclosure, "not include a or any 'component‴, "exclude a or any 'component‴, ʺ′component'-free", and/or the like refers to that the "component" not being added, selected or utilized as a component in the composition or compound, but the "component" of less than a suitable amount may still be included due to other impurities and/or external factors.

A battery management system (BMS) device, and/or any other relevant devices or components according to embodiments of the present disclosure described herein may be implemented utilizing any suitable hardware, firmware (e.g. an application-specific integrated circuit), software, or a combination of software, firmware, and hardware. For example, the one or more suitable components of the device may be formed on one integrated circuit (IC) chip or on separate IC chips. Further, the one or more suitable components of the device may be implemented on a flexible printed circuit film, a tape carrier package (TCP), a printed circuit board (PCB), or formed on one substrate. Further, the one or more suitable components of the device may be a process or thread, running on one or more processors, in one or more computing devices, executing computer program instructions and interacting with other system components for performing the one or more suitable functionalities described herein. The computer program instructions are stored in a memory which may be implemented in a computing device utilizing a standard memory device, such as, for example, a random access memory (RAM). The computer program instructions may also be stored in other non-transitory computer readable media such as, for example, a CD-ROM, flash drive, and/or the like. Also, a person of skill in the art should recognize that the functionality of one or more suitable computing devices may be combined or integrated into a single computing device, or the functionality of a particular computing device may be distributed across one or more other computing devices without departing from the scope of the present disclosure.

In the present disclosure, when particles are spherical, "diameter" indicates a particle diameter or an average particle diameter, and when the particles are non-spherical, the "diameter" indicates a major axis length or an average major axis length.

In present disclosure, "not include a or any 'component′ʺ "exclude a or any 'component′ʺ, ʺ′component'-free", and/or the like refers to that the "component" not being added, selected or utilized as a component in the composition/structure, but the "component" of less than a suitable amount may still be included due to other impurities and/or external factors.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the drawings, it will be understood by those of ordinary skill in the art that one or more suitable changes in form and details may be made therein without departing from the spirit and scope of the present disclosure as defined by the following claims and equivalents thereof and equivalents thereof.

## Claims

1. A cathode (10), the cathode (10) comprising:
a cathode current collector (11);
a carbon coating layer (13) on the cathode current collector (11); and
a cathode active material layer (12) on the carbon coating layer (13) and containing a composite cathode active material and a solid electrolyte,
wherein the composite cathode active material comprises a Li₂S-containing composite, and
wherein the cathode (10) is for an all solid secondary battery (1) .

2. The cathode (10) as claimed in claim 1, wherein the carbon coating layer (13) has a thickness of about 1 µm or less and/or comprises natural graphite, artificial graphite, carbon black, acetylene black, Ketjen black, carbon fibers, carbon nanotubes, graphene, porous carbon, or a combination thereof.

3. The cathode (10) as claimed in claim 1 or 2, further comprising an interlayer, preferably having a thickness of the interlayer is about 5 nm to about 1 µm, containing an adhesive polymer, the interlayer being between the carbon coating layer (13) and the cathode active material layer (12), wherein preferably the adhesive polymer is one or more selected from among polydopamine, a cation-substituted polycarboxylic acid, a cation-substituted polycarboxylic acid copolymer, polynorepinephrine, poly(meth)acrylamide, polyvinyl alcohol, polyhydroxyethyl(meth)acrylate, poly(methyl(meth)acrylate-co-(meth)acrylic acid), polymethyl(meth)acrylate, poly((meth)acrylic acid), and a styrene-(meth)acrylic acid copolymer.

4. The cathode (10) as claimed in claim 1, wherein the Li₂S-containing composite comprises a composite of Li₂S and a lithium salt,
wherein the composite of Li₂S and a lithium salt is expressed as Li₂S-LiₐX_{b} (1≤a≤5, 1≤b≤5), and
wherein X is I, Br, Cl, F, H, O, Se, Te, N, P, As, Sb, Al, B, OCI, PF₆, BF₄, SbF₆, AsF₆, ClO₄, AlO₂, AlCl₄, NOs, COs, BH₄, SO₄, BOs, PO₄, NCI, NCl₂, BN₂, or a combination thereof;
and/or the lithium salt is a binary compound or a ternary compound, the binary compound comprising Lil, LiBr, LiCI, LiF, LiH, Li₂O, Li₂Se, Li₂Te, LisN, LisP, LisAs, LisSb, Li₃Al₂, LiBs, or a combination thereof, the ternary compound comprising LisOCI, LiPF₆, LiBF₄, LiSbF₆, LiAsF₆, LiClO₄, LiAlO₂, LiAlCl₄, LiNOs, Li₂CO₃, LiBH₄, Li₂SO₄, LisBOs, Li₃PO₄, Li₄NCl, Li₅NCl₂, Li₃BN₂, or a combination thereof.

5. The cathode (10) as claimed in any of the claims 1 to 3, wherein the Li₂S-containing composite further comprises a carbonaceous material,
wherein the carbonaceous material comprises a fibrous carbonaceous material, and
wherein the fibrous carbonaceous material comprises a carbon nanostructure, the carbon nanostructure comprising a carbon nanofiber, a carbon nanotube, a carbon nanobelt, a carbon nanorod, or a combination thereof, and
wherein an amount of the carbonaceous material is about 1 wt% to about 20 wt% with respect to a total weight of the composite.

6. The cathode (10) as claimed in any of the claims 1 to 5, wherein the Li₂S-containing composite comprises a solid solution of Li₂S and a lithium salt,
wherein a size of particles of the composite is about 10 µm or less, and
wherein a size of Li₂S crystallites obtained from an XRD spectrum of the composite is about 20 nm or less.

7. The cathode (10) as claimed in any of the claims 1 to 6, wherein an amount of the Li₂S in the composite is higher than an amount of the lithium salt, and a molar ratio of the Li₂S to the lithium salt in the composite is about 51:49 to about 95:5.

8. The cathode (10) as claimed in any of the claims 1 to 5, wherein an amount of the composite is about 60 wt% to about 80 wt% of a total weight of the cathode active material layer (12).

9. The cathode (10) as claimed in any of the claims 1 to 8, wherein the solid electrolyte is a sulfide-based solid electrolyte,
wherein the sulfide-based solid electrolyte is at least one selected from among Li₂S-P₂S₅, Li₂S-P₂S₅-LiX, wherein X is a halogen element, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ, wherein m and n each are a positive number, and Z is Ge, Zn or Ga, Li₂S-GeS₂, Li₂S-SiS₂-Li₃PO₄, Li₂S-SiS₂-LiₚMO_{q}, wherein p and q each are a positive number and M is P, Si, Ge, B, Al, Ga or In, Li₇₋ₓPS₆₋ₓClₓ, wherein 0≤x≤2, Li₇₋ₓPS₆₋ₓBrₓ, wherein 0≤x≤2, and Li₇₋ₓPS₆₋ₓIₓ, wherein 0≤x≤2,
the sulfide-based solid electrolyte comprising an argyrodite-type solid electrolyte,
wherein the argyrodite-type solid electrolyte comprises one or more selected from among Li₆PS₅Cl, Li₆PS₅Br, and LisPSsl,
wherein the argyrodite-type solid electrolyte has a density of about 1.5 g/cc to about 2.0 g/cc, and
wherein the sulfide-based solid electrolyte comprises particles, and an average particle diameter (D50) of the particles is about 0.1 µm to about 1.9 µm.

10. An all solid secondary battery (1) comprising:
a cathode (10);
an anode (20); and
a solid electrolyte layer (30) between the cathode (10) and the anode (20),
wherein the cathode (10) comprises the cathode (10) as claimed in any of the claims 1 to 9.

11. The all solid secondary battery (1) as claimed in claim 10, wherein the anode (20) comprises an anode current collector (21) and a first anode active material layer (22) on at least one surface of the anode current collector (21).whereby preferably
the first anode active material layer (22) is a metal layer, the metal layer comprising lithium or a lithium alloy; or
the first anode active material layer (22) comprises an anode active material and a binder, the anode active material comprising particles, the particles of the anode active material having an average particle diameter of about 4 µm or less.

12. The all solid secondary battery (1) as claimed in claim 10 or 11, wherein the first anode active material layer (22) comprises at least one selected from among a carbonaceous anode active material and a metal or metalloid anode active material,
wherein the carbonaceous anode active material comprises amorphous carbon, crystalline carbon, porous carbon, or a combination thereof,
wherein the metal or metalloid anode active material comprises gold (Au), platinum (Pt), palladium (Pd), silicon (Si), silver (Ag), aluminum (Al), bismuth (Bi), tin (Sn), zinc (Zn), or a combination thereof,
wherein the anode active material comprises a mixture of first particles composed of amorphous carbon and second particles composed of a metal or a metalloid, and
wherein an amount of the second particles is about 1 wt% to about 60 wt% with respect to a total weight of the mixture.

13. The all solid secondary battery (1) as claimed in any of the claims 10 to 12, further comprising a second anode active material layer (24), the second anode active material layer (24) being arranged between the anode current collector (21) and the first anode active material layer (22) and/or between the anode current collector (21) and a solid electrolyte layer (30),
wherein the second anode active material layer (24) is a metal layer, the metal layer comprising lithium or a lithium alloy.

14. The all solid secondary battery (1) as claimed in and of the claims 10 to 13, wherein the solid electrolyte layer (30) comprises a solid electrolyte, a gel electrolyte, or a combination thereof, the solid electrolyte comprising a sulfide-based solid electrolyte, an oxide-based solid electrolyte, a polymer solid electrolyte, or a combination thereof, the gel electrolyte comprising a polymer gel electrolyte.

15. The all solid secondary battery (1) as claimed in any of the claims 10 to 14, wherein the cathode (10) comprises a cathode current collector (11), and the anode (20) comprises an anode current collector (21),
wherein at least one of the cathode current collector (11) or the anode current collector (21) comprises a base film and a metal layer on at least one side of the base film,
wherein the base film comprises a polymer, the polymer comprising polyethylene terephthalate (PET), polyethylene (PE), polypropylene (PP), polybutylene terephthalate (PBT), polyimide (PI), or a combination thereof, and
wherein the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.
